# EUROPEAN PATENT APPLICATION

(11) **EP 4 811 097 A1**
(43) Date of publication of application: **23.09.2026**
(21) Application number: 25829284.6
(22) Date of filing: 14.02.2025
(51) Int. Cl.: G06F 3/0485

(54) **PAGE TURNING METHOD, ELECTRONIC DEVICE AND STORAGE MEDIUM**

(30) Priority: 20.06.2024 CN 202410808296
(71) Applicant: Huawei Technologies Co., Ltd., Shenzhen, Guangdong 518129 (CN)
(72) Inventor: SUN, Yin, Shenzhen, Guangdong 518129 (CN); WANG, Xiaomei, Shenzhen, Guangdong 518129 (CN); WANG, Mo, Shenzhen, Guangdong 518129 (CN)
(74) Representative: Maiwald GmbH
(86) International application number: PCT/CN2025/077414
(87) International publication number: WO 2025/260791

(57) **Abstract**

This application provides a page turning method, an electronic device, and a storage medium. The page turning method is applied to an electronic device, and includes: displaying an application interface of a first application, where the application interface includes a first display area and a second display area, and the first display area and the second display area partially overlap or do not overlap; in response to determining that a gaze point of a user relative to the application interface moves from the first display area to the second display area, determining page turning waiting time of the application interface of the first application; and in response to determining that the gaze point of the user moves from the first display area to the second display area, after the page turning waiting time has elapsed, and in response to determining that the gaze point of the user moves from the second display area to the first display area, performing a page turning operation on the application interface of the first application. According to the method, precise automatic page turning can be performed, thereby improving reading experience of the user.

## Description

This application claims priority to Chinese Patent Application No. 202410808296.3, filed with the China National Intellectual Property Administration on June 20, 2024 and entitled "PAGE TURNING METHOD, ELECTRONIC DEVICE, AND STORAGE MEDIUM", which is incorporated herein by reference in its entirety.

### TECHNICAL FIELD

This application relates to the field of software technologies, and in particular, to a page turning method, an electronic device, and a storage medium.

### BACKGROUND

With rapid development of network technologies, intelligent terminal devices such as smartphones and tablet computers are increasingly popular, bringing great convenience to people's life, study, and work. In recent years, digital reading has become very popular, and most reading software, such as reading applications (Application, APP), browser APPs, and information feed APPs, adopts manual page turning interactions, for example, swiping or tapping with a finger to turn pages. This manual page turning approach requires users to frequently use their hands for extended periods, leading to fatigue and tying up one hand. When it is inconvenient for the users to operate the screen or a device screen is too large to handle comfortably, the overall user interaction experience deteriorates.

Some reading software also provides automatic page turning interactions, for example, vertical scrolling for page turning. This method allows users to scroll downward or upward at a constant speed set by the user. However, since the scrolling speed remains fixed, but content density and difficulty of pages vary, and thus a reading speed of the user varies, the page scrolling speed cannot well match the reading speed of the user. Consequently, such a vertical scrolling approach for page turning cannot deliver a good reading experience for users.

### SUMMARY

Some implementations of this application provide a page turning method, an electronic device, and a storage medium. The following describes this application from a plurality of aspects. For implementations and beneficial effect of the following plurality of aspects, refer to each other.

According to a first aspect, an implementation of this application provides a page turning method, applied to an electronic device, where the method includes:
displaying an application interface of a first application, where the application interface includes a first display area and a second display area, and the first display area and the second display area partially overlap or do not overlap;
in response to determining that a gaze point of a user relative to the application interface moves from the first display area to the second display area, determining page turning waiting time of the application interface of the first application; and
in response to determining that the gaze point of the user moves from the first display area to the second display area, after the page turning waiting time has elapsed, and in response to determining that the gaze point of the user moves from the second display area to the first display area, performing a page turning operation on the application interface of the first application.

According to an implementation of this application, the electronic device may divide the application interface into an upper area (an example of the first display area) and a lower area (an example of the second display area), and may detect a change of the gaze point of the user based on an eye tracking technology. After determining that the gaze point of the user moves from the upper area to the lower area, the electronic device may estimate remaining reading time required by the user to read page content in the lower area and use the remaining reading time as the page turning waiting time, and enter a waiting time window. After the waiting time window, when determining that the gaze point of the user moves from the lower area to the upper area again, the electronic device may determine that a page turning intention of the user is detected, and further perform an automatic page turning operation. In this way, when the user decides to turn a page after reading the page content in the lower area, the user only needs to move the gaze point to the upper area, and the page can be automatically turned, without any mechanical movement of a hand of the user, thereby greatly alleviating fatigue and improving reading experience of the user. In addition, the electronic device recognizes reading progress of the user on a current page and a page turning intention of the user by detecting a change of the gaze point of the user, so that recognition accuracy is high, fault tolerance is good, and applicability is high.

In addition, the electronic device sets an overlapping part between the upper area and the lower area as a transition area. When the gaze point of the user moves from an upper grid (an example of an area other than the transition area in the upper area) to the transition area, a change of the area in which the gaze point of the user is located is not detected. When the gaze point of the user moves from a lower grid (an example of an area other than the transition area in the lower area) to the transition area, a change of the area in which the gaze point of the user is located is not detected. A size of the transition area may affect sensitivity of switching the gaze point between the upper area and the lower area. A larger transition area indicates lower sensitivity, and a smaller transition area indicates higher sensitivity. Therefore, the electronic device can adjust sensitivity of switching the gaze point between the upper area and the lower area by setting an intermediate transition area, to avoid a problem that when the gaze point of the user jumps in the intermediate area, switching of the area in which the gaze point of the user is located is frequently detected, and an intention recognition error is caused.

In some implementations, the method further includes:
in response to determining that the gaze point of the user moves from the first display area to the second display area, displaying page turning prompt information in the application interface of the first application after the page turning waiting time has elapsed, where
the page turning prompt information prompts the user to move the gaze point from the second display area to the first display area, to turn a page.

According to an implementation of this application, after the electronic device determines that the gaze point of the user moves from the upper area to the lower area, and after the waiting time window, the electronic device may determine that the user has read the page content of the current page (that is, the bottom of the page is read). In this case, the electronic device may perform page turning prompt, to guide the user to look up to turn a page, so that the user obtains a psychological implication that an explicit intention has been accurately recognized, thereby further improving reading experience of the user.

In some implementations, the determining that the gaze point of the user relative to the application interface moves from the first display area to the second display area includes:
determining that a display area in which the gaze point of the user is currently located is the second display area, and determining that a display area in which the gaze point of the user is previously located is the first display area; and
the determining that the gaze point of the user moves from the second display area to the first display area includes:
   determining that the display area in which the gaze point of the user is currently located is the first display area, and determining that the display area in which the gaze point of the user is previously located is the second display area, where
   the display area in which the gaze point of the user is currently located and the display area in which the gaze point of the user is previously located are determined based on at least one frame of facial image of the user.

According to an implementation of this application, the electronic device may determine coordinates of the gaze point of the user by using one or more frames of facial images, to determine a specific display area in which the gaze point of the user is concentrated on the application interface. In this multi-frame smooth processing manner, accuracy of determining the display area in which the gaze point of the user is located can be improved, a gaze point jump can be effectively suppressed, and accuracy of reading progress and page turning intention recognition can be further improved.

In some implementations, the determining the page turning waiting time of the application interface of the first application includes:
determining a page reading speed of the user in the first display area;
estimating, based on the page reading speed, remaining reading time of the user in the second display area; and
determining the page turning waiting time based on the remaining reading time.

According to an implementation of this application, the electronic device dynamically calculates a reading speed of reading the upper area by the user, and estimates a reading time of reading the lower area by the user based on the reading speed, so that determining of reading progress is converted into determining of the reading time. In this way, the electronic device does not need to accurately recognize a word or a line on which the gaze point of the user falls on the page, thereby providing a favorable condition for a solution of performing eye tracking by using a low-power-consumption camera, so that long time reading does not affect or slightly affect battery life of the electronic device, and the user is willing to use the electronic device for long time, thereby reducing pressure, interference, and concern of the user during long time use.

In some implementations, the determining the page reading speed of the user in the first display area includes:
obtaining first accumulated time in which the gaze point of the user stays in the first display area; and
determining the page reading speed based on the first accumulated time and a page information amount in the first display area.

In some implementations, the estimating, based on the page reading speed, the remaining reading time of the user in the second display area includes:
when the page reading speed is within a preset speed range, determining estimated reading time of the user in the second display area based on a page information amount in the second display area and the page reading speed;
when the page reading speed is beyond the preset speed range, determining the estimated reading time of the user in the second display area based on the page information amount in the second display area and a preset reading speed or a historical reading speed of the user; and
determining the remaining reading time based on the estimated reading time and second accumulated time in which the gaze point of the user stays in the second display area.

According to this implementation of this application, the electronic device dynamically calculates the reading speed of the user in the upper area based on the page information amount in the upper area of the current page and the accumulated time for which the gaze point of the user stays in the upper area. Then, the electronic device estimates, based on the reading speed obtained through calculation, expected time for the user to read the page content in the lower area, and remaining reading time for the user to read the page content in the lower area. In this way, the electronic device can accurately determine the reading progress of the user based on the reading time of the user, and can resolve a problem that a gaze point position of the user cannot be accurately recognized due to accuracy limitation of the low-power-consumption camera technology, and the reading progress of the user cannot be determined based on an accurate position of the gaze point of the user.

In addition, accumulated duration of reading an upper half screen by the user and accumulated duration of reading a lower half screen by the user are counted, to dynamically determine the waiting time window for detecting the page turning intention of the user, so that impact of a problem that the gaze point of the user jumps in the middle area on recognition accuracy of the page turning intention can be further reduced.

In addition, the electronic device determines whether the reading speed obtained through calculation meets a normal range, or determines, with reference to the historical reading speed of the user, whether a large error exists, discards data that does not meet the normal range or has a large error, and uses the preset reading speed or the historical reading speed of the user to estimate the reading time, so that accuracy of recognizing reading progress of the user can be further ensured.

In some implementations, the determining the page turning waiting time based on the remaining reading time includes:
when the remaining reading time is within a preset time range, determining the page turning waiting time as the remaining reading time;
when the remaining reading time is less than a minimum value of the preset time range, determining that the page turning waiting time is first preset time; and
when the remaining reading time is greater than a maximum value of the preset time range, determining that the page turning waiting time is second preset time.

According to this implementation of this application, the electronic device determines whether estimated remaining reading time is within a reasonable duration interval, discards data that is not within the reasonable duration interval, and uses the preset time as the page turning waiting time. This can avoid excessively fast page turning (or a user is prompted to turn a page too fast, causing mistaken page turning), or avoid that page turning is not performed for long time (or the user is not prompted to turn a page for long time, causing long waiting time of the user). Therefore, time for automatic page turning is within a reasonable time range, thereby further providing reading experience of the user.

In some implementations, the performing the page turning operation on the application interface of the first application includes:
in response to determining that the gaze point of the user moves from the second display area to the first display area, performing, after third preset time has elapsed, the page turning operation on the application interface of the first application.

In some implementations, the method further includes:
within the third preset time, in response to determining that the gaze point of the user moves from the first display area to the second display area, skipping performing the page turning operation on the application interface of the first application.

According to an implementation of this application, after determining that the gaze point of the user moves from the lower area to the upper area, the electronic device enters a delayed execution time window. When no switching of the user gaze point between the upper area and the lower area occurs in the delayed execution time window, it is considered that a page turning intention that the user gaze point moves upward is true. In this case, the electronic device performs the page turning operation. If the gaze point of the user moves to the lower area again in the delayed execution time window, it is considered that the previous upward movement of the gaze point of the user is an error operation and is suppressed. The delayed execution time window can avoid a problem that a page is incorrectly turned because the user incorrectly views the upper area when the user does not completely view the page content in the lower area, and a problem that a page is incorrectly turned because the gaze point jumps due to an algorithm recognition error.

According to a second aspect, an implementation of this application provides a page turning method, applied to an electronic device, where the method includes:
displaying an application interface of a second application, where the application interface includes a first display area and a second display area, and the first display area and the second display area partially overlap or do not overlap;
in response to determining that a gaze point of a user relative to the application interface moves from the first display area to the second display area, and after fourth preset time has elapsed, adjusting a page scrolling speed of the application interface of the second application from a first scrolling speed to a second scrolling speed.

According to an implementation of this application, the electronic device may divide the application interface into an upper area and a lower area (an example of the first display area and the second display area), and may detect a change of the gaze point of the user based on an eye tracking technology. In a case in which the user is accustomed to gazing at an upper part of the application interface, if it is determined that the gaze point of the user moves from the upper area to a lower area, it may be determined that a page scrolling speed is slower than a reading speed of the user. In this case, the electronic device may increase the page scrolling speed. In a case in which the user is accustomed to gazing at the lower part of the application interface, if it is determined that the gaze point of the user moves from the lower area to the upper area, it may be determined that the page scrolling speed is faster than the reading speed of the user. In this case, the electronic device may reduce the page scrolling speed. In this way, the electronic device can dynamically adjust the page scrolling speed based on the reading speed of the user, so that the page scrolling speed matches a reading habit and the reading speed of the user, and the user does not need to manually adjust the page scrolling speed, thereby greatly improving reading experience of the user.

In addition, the electronic device sets an overlapping part between the upper area and the lower area as a transition area. When the gaze point of the user moves from an upper grid (an example of an area other than the transition area in the upper area) to the transition area, a change of the area in which the gaze point of the user is located is not detected. When the gaze point of the user moves from a lower grid (an example of an area other than the transition area in the lower area) to the transition area, a change of the area in which the gaze point of the user is located is not detected. A size of the transition area may affect sensitivity of switching the gaze point between the upper area and the lower area. A larger transition area indicates lower sensitivity, and a smaller transition area indicates higher sensitivity. Therefore, the electronic device can adjust sensitivity of switching the gaze point between the upper area and the lower area by setting an intermediate transition area, to avoid a problem that when the gaze point of the user jumps in the intermediate area, switching of the area in which the gaze point of the user is located is frequently detected, and an intention recognition error is caused.

In some implementations, the method further includes:
determining an adjustment coefficient corresponding to the user; and
determining the second scrolling speed based on the adjustment coefficient.

In some implementations, the method further includes:
in response to determining that the gaze point of the user moves from the second display area to the first display area, and after fifth preset time has elapsed, adjusting the page scrolling speed of the application interface of the second application from the second scrolling speed to the first scrolling speed.

According to an implementation of this application, when the user is accustomed to gazing at the upper part of the application interface, if it is determined that the gaze point of the user moves from the lower area to the upper area, it may be determined that the page scrolling speed is faster than the reading speed of the user. In this case, the electronic device may restore a default scrolling speed. When the user is accustomed to gazing at the lower part of the application interface, if it is determined that the gaze point of the user moves from the upper area to the lower area, it may be determined that the page scrolling speed is slower than the reading speed of the user. In this case, the electronic device may also restore the default scrolling speed. In this way, the electronic device can dynamically adjust the page scrolling speed based on the reading speed of the user, so that the page scrolling speed matches a reading habit and the reading speed of the user, and the user does not need to manually adjust the page scrolling speed, thereby greatly improving reading experience of the user.

According to a third aspect, an implementation of this application provides an electronic device, including: a memory, configured to store instructions executed by one or more processors of the electronic device; and a processor, where when the processor executes the instructions in the memory, the electronic device may perform the page turning method provided in any implementation of the first aspect or the second aspect of this application. For beneficial effect that can be achieved in the third aspect, refer to beneficial effect of any implementation of the first aspect or the second aspect of this application. Details are not described herein again.

According to a fourth aspect, an implementation of this application provides a computer-readable storage medium. The computer-readable storage medium stores instructions. When the instructions are executed on a computer, the computer is caused to perform the page turning method provided in any one of the implementations of the first aspect or the second aspect of this application. For beneficial effect that can be achieved in the fourth aspect, refer to beneficial effect of any implementation of the first aspect or the second aspect of this application. Details are not described herein again.

### BRIEF DESCRIPTION OF DRAWINGS

FIG. 1 is a diagram of an application scenario according to an embodiment of this application;
FIG. 2a is a diagram of a setting interface of an air gesture swipe screen function according to some embodiments;
FIG. 2b is a diagram of an interaction manner of turning pages by using air gesture according to some embodiments;
FIG. 2c and FIG. 2d are diagrams of setting interfaces for setting a scrolling speed according to some embodiments;
FIG. 3a is a diagram of a structure of an electronic device according to an embodiment of this application;
FIG 3b is a block diagram of a software structure of an electronic device according to an embodiment of this application.
FIG. 3c is a diagram of a system architecture of an electronic device according to an embodiment of this application;
FIG. 4 is a flowchart of a page turning method according to an embodiment of this application;
FIG. 5a is a diagram of an application interface of a reading APP according to an embodiment of this application;
FIG. 5b is a diagram of a transition area according to an embodiment of this application;
FIG. 5c is a diagram of an application interface of a reading APP according to another embodiment of this application;
FIG. 5d is a diagram of an application interface of a reading APP according to still another embodiment of this application;
FIG. 5e is a diagram of an application interface of a reading APP according to yet another embodiment of this application;
FIG. 6A to FIG. 6C are a flowchart of a page turning method according to a specific embodiment of this application;
FIG. 7a is a diagram of a gaze point jump according to an embodiment of this application;
FIG. 7b is a diagram of a gaze point jump according to another embodiment of this application;
FIG. 8A and FIG. 8B are a processing flowchart of triggering a fence event according to a specific embodiment of this application;
FIG. 9 is a diagram of a change of a display area in which a gaze point of a user is located according to an embodiment of this application;
FIG. 10 is a processing flowchart of opening a new page according to an embodiment of this application;
FIG. 11 is a processing flowchart of switching from gazing at a lower area to gazing at an upper area according to an embodiment of this application;
FIG. 12A and FIG. 12B are a processing flowchart of switching from gazing at an upper area to gazing at a lower area according to an embodiment of this application;
FIG. 13 is a flowchart of a page turning method according to another embodiment of this application;
FIG. 14a is a diagram of a left and right page turning process according to an embodiment of this application;
FIG. 14b is a diagram of a page turning process of an upper half screen and a lower half screen according to an embodiment of this application;
FIG. 15 is a diagram of switching a mobile phone from a portrait mode to a landscape mode according to an embodiment of this application;
FIG. 16A to FIG. 16D are a flowchart of a page turning method according to another specific embodiment of this application;
FIG. 17 is a flowchart of a page turning method according to still another embodiment of this application.
FIG. 18A to FIG. 18C are a flowchart of a page turning method according to still another specific embodiment of this application;
FIG. 19 is a diagram of accelerated scrolling page turning according to an embodiment of this application;
FIG. 20 is a flowchart of a page turning method according to yet another embodiment of this application;
FIG. 21A to FIG. 21C are a flowchart of a page turning method according to yet another specific embodiment of this application;
FIG. 22 is a diagram of decelerated scrolling page turning according to an embodiment of this application;
FIG. 23 is a block diagram of an electronic device according to an embodiment of this application; and
FIG. 24 is a block diagram of a system on chip (System on Chip, SOC) according to an embodiment of this application.

### DESCRIPTION OF EMBODIMENTS

The following clearly and completely describes the technical solutions in embodiments of this application with reference to the accompanying drawings in embodiments of this application.

The page turning method provided in embodiments of this application may be applied to scenarios in which users read page content in an application interface of reading software on electronic devices, especially in a process of controlling page turning of the application interface of the reading software. This is particularly useful in scenarios in which it is inconvenient for users to manually turn pages, for example, when user are lying down, have dirty hands, or are wearing gloves.

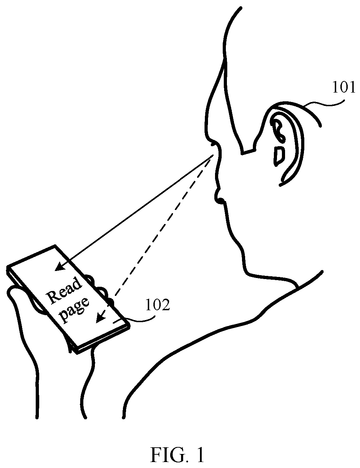

Refer to FIG. 1 in the specification. FIG. 1 is a diagram of an application scenario according to an embodiment of this application. As shown in FIG. 1, in this scenario, a user 101 may read page content in an application interface 102 of reading software on the electronic device at a specific speed. After reading content on a current page, the user needs to perform a page turning operation on the application interface 102 of the reading software. The reading software may be any type of APP that provides information for the user, for example, include but is not limited to a reading APP, a browser APP, and an information feed APP. This is not specifically limited in embodiments of this application.

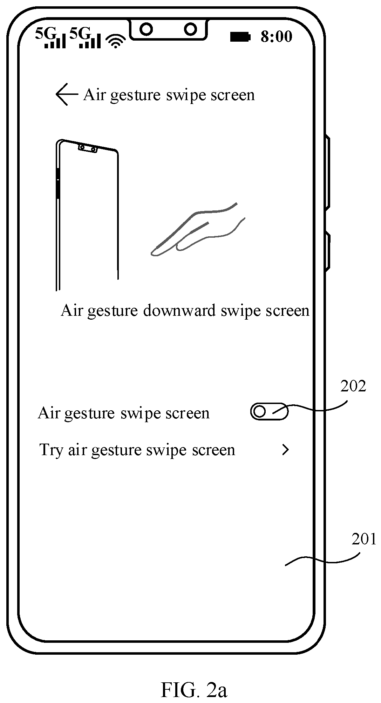

In some embodiments, the user may set, on a setting interface of the electronic device, whether to enable an air gesture swipe screen function. With reference to FIG. 2a in the specification, FIG. 2a is a diagram of a setting interface of an air gesture swipe screen function according to some embodiments. As shown in FIG. 2a, a setting interface 201 of the air gesture swipe screen function may include a control 202 for enabling the air gesture swipe screen function. The electronic device may enable the air gesture swipe screen function in response to a tap operation performed by the user on the control 202.

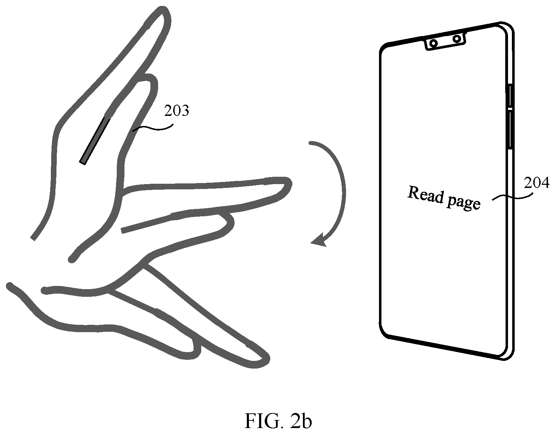

When the air gesture swipe screen function is enabled, the electronic device may implement page turning in an interaction manner of turning pages by using air gesture. With reference to FIG. 2b in the specification, FIG. 2b is a diagram of an interaction manner of turning pages by using air gesture according to some embodiments. As shown in FIG. 2b, when the air gesture swipe screen function is enabled, the electronic device may recognize gesture information of the user based on a machine vision technology. When detecting a user gesture (for example, an air downward wave gesture 203 shown in FIG. 2b) indicating page turning, the electronic device performs a page turning operation on an application interface 204 of the reading software.

Although this page turning manner does not require a finger to touch the screen, and can resolve a problem that it is inconvenient to touch the screen by using a hand to turn a page, the user still needs to frequently perform a gesture operation for long time, which easily causes fatigue and requires a single-hand operation, and does not really liberate the hand of the user. In addition, this page turning manner suffers from a low recognition speed and low accuracy, occasional recognition failures, a complex interaction process, and high power consumption.

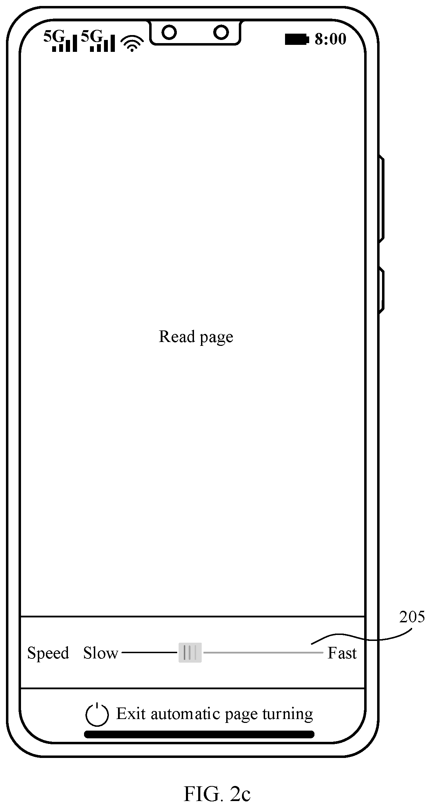

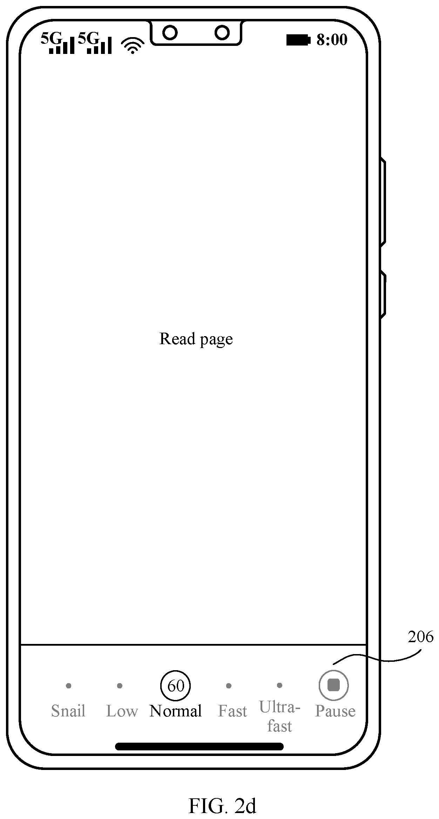

In some embodiments, the electronic device may implement automatic page turning in a scrolling page turning interaction manner. Specifically, the user may set a scrolling speed on a setting interface of the electronic device, and correspondingly, the electronic device may obtain the scrolling speed set by the user. With reference to FIG. 2c and FIG. 2d in the specification, FIG. 2c and FIG. 2d are diagrams of setting interfaces for setting the scrolling speed according to some embodiments. As shown in FIG. 2c, the electronic device may provide a setting interface 205 for setting the scrolling speed for the user, and obtain the scrolling speed set by the user based on the setting interface 205. Alternatively, as shown in FIG. 2d, the electronic device may provide a setting interface 206 for setting the scrolling speed for the user, and obtain the scrolling speed set by the user based on the setting interface 206.

Then, the electronic device may control, based on the scrolling speed set by the user, the page to be scrolled down or up at a uniform speed to turn a page. Because the scrolling speed is fixed, but content density and difficulty of the page vary, that is, a reading speed of the user varies, the page scrolling speed cannot well match the reading speed of the user. Consequently, the user has a poor reading experience when using the scrolling page turning manner. In addition, the scrolling page turning interaction manner is mainly applicable to an up and down scrolling page turning mode. In a simulation page turning mode and a left and right overlay page turning mode, there is a problem of premature or delayed page turning, and user experience is poor.

In some embodiments, the electronic device may capture facial image information of the user, determine a direction of a line of sight of the user based on the captured facial information of the user, obtain coordinates of the line of sight of the user on a display based on the direction of the line of sight of the user, and determine, based on the coordinates of the line of sight of the user on the display, a display area in which the line of sight of the user is located. The electronic device may compare a display area in which a current line of sight of the user is located with a display area in which a previous line of sight of the user is located. When the area in which the current line of sight of the user is located is different from the area in which the previous line of sight of the user is located, the electronic device refreshes content displayed in the display area in which the previous line of sight is located to content of a next page of page content displayed in the display area in which the current line of sight of the user is located. The page includes a page of a display area of an e-reader, and the content of the next page includes content of a next page displayed in the display area of the e-reader. This page turning manner is mainly applicable to a page turning mode in which a display is divided into two parts and paging turning of the two parts of the display is controlled respectively, and is not applicable to another page turning mode. In addition, a line of sight jump exists between two display areas, and page turning is easily triggered by mistake, resulting in poor user experience.

Therefore, an implementation of this application provides a page turning method, to implement automatic page turning and improve reading experience of the user.

According to an implementation of this application, an electronic device may divide an application interface into an upper area (an example of a first display area) and a lower area (an example of a second display area), and may detect a change of a gaze point of the user based on an eye tracking technology. After determining that the gaze point of the user moves from the upper area to the lower area, the electronic device may estimate remaining reading time required by the user to read page content in the lower area and use the remaining reading time as page turning waiting time, and enter a waiting time window. After the waiting time window, when determining that the gaze point of the user moves from the lower area to the upper area again, the electronic device may determine that a page turning intention of the user is detected, and further perform an automatic page turning operation. In this way, when the user decides to turn a page after reading the page content in the lower area, the user only needs to move the gaze point to the upper area, and the page can be automatically turned, without any mechanical movement of a hand of the user, thereby greatly alleviating fatigue and improving reading experience of the user. In addition, the electronic device recognizes reading progress of the user on a current page and a page turning intention of the user by detecting a change of the gaze point of the user, so that recognition accuracy is high, fault tolerance is good, and applicability is high.

In addition, the electronic device sets an overlapping part between the upper area and the lower area as a transition area. When the gaze point of the user moves from an upper grid (an example of an area other than the transition area in the upper area) to the transition area, a change of the area in which the gaze point of the user is located is not detected. When the gaze point of the user moves from a lower grid (an example of an area other than the transition area in the lower area) to the transition area, a change of the area in which the gaze point of the user is located is not detected. A size of the transition area may affect sensitivity of switching the gaze point between the upper area and the lower area. A larger transition area indicates lower sensitivity, and a smaller transition area indicates higher sensitivity. Therefore, the electronic device can adjust sensitivity of switching the gaze point between the upper area and the lower area by setting an intermediate transition area, to avoid a problem that when the gaze point of the user jumps in the intermediate area, switching of the area in which the gaze point of the user is located is frequently detected, and an intention recognition error is caused.

According to another implementation of this application, after the electronic device determines that the gaze point of the user moves from the upper area to the lower area, and after the waiting time window, the electronic device may determine that the user has read the page content of the current page (that is, the bottom of the page is read). In this case, the electronic device may perform page turning prompt, to guide the user to look up to turn a page, so that the user obtains a psychological implication that an explicit intention has been accurately recognized, thereby further improving reading experience of the user.

According to another implementation of this application, the electronic device may divide the application interface into the upper area and the lower area (an example of the first display area and the second display area), and may detect a change of the gaze point of the user based on an eye tracking technology. In a case in which the user is accustomed to gazing at an upper part of the application interface, if it is determined that the gaze point of the user moves from the upper area to a lower area, it may be determined that a page scrolling speed is slower than a reading speed of the user. In this case, the electronic device may increase the page scrolling speed. In a case in which the user is accustomed to gazing at the lower part of the application interface, if it is determined that the gaze point of the user moves from the lower area to the upper area, it may be determined that the page scrolling speed is faster than the reading speed of the user. In this case, the electronic device may reduce the page scrolling speed. In this way, the electronic device can dynamically adjust the page scrolling speed based on the reading speed of the user, so that the page scrolling speed matches a reading habit and the reading speed of the user, and the user does not need to manually adjust the page scrolling speed, thereby greatly improving reading experience of the user.

In the foregoing embodiment, the electronic device may be a single screen, a foldable screen, a curved screen, or the like. The foldable screen may be a structure having two screens physically, or may be a structure having one screen physically. This is not limited herein. In another embodiment of this application, the page turning method in this application may also be applied to an electronic device having more than three screens. This is not limited herein.

In the foregoing embodiment, a division manner of the application interface is an upper and lower area division manner of the electronic device in a portrait mode. In another embodiment of this application, the division manner of the application interface may be a left and right area division manner of the electronic device in a landscape mode. In the left and right area division manner of the electronic device in the landscape mode, a left area on a left side of a display interface is the first display area, and a right area on a right side of the display interface is the second display area.

A form of the electronic device is not limited in embodiments of this application. The electronic device may be an electronic device having a display, such as a mobile phone, a tablet, a laptop, a smart screen, or an in-vehicle device (for example, a head unit or an in-vehicle navigator). This is not limited herein.

The following describes the page turning method in embodiments of this application with reference to a specific structure of the electronic device.

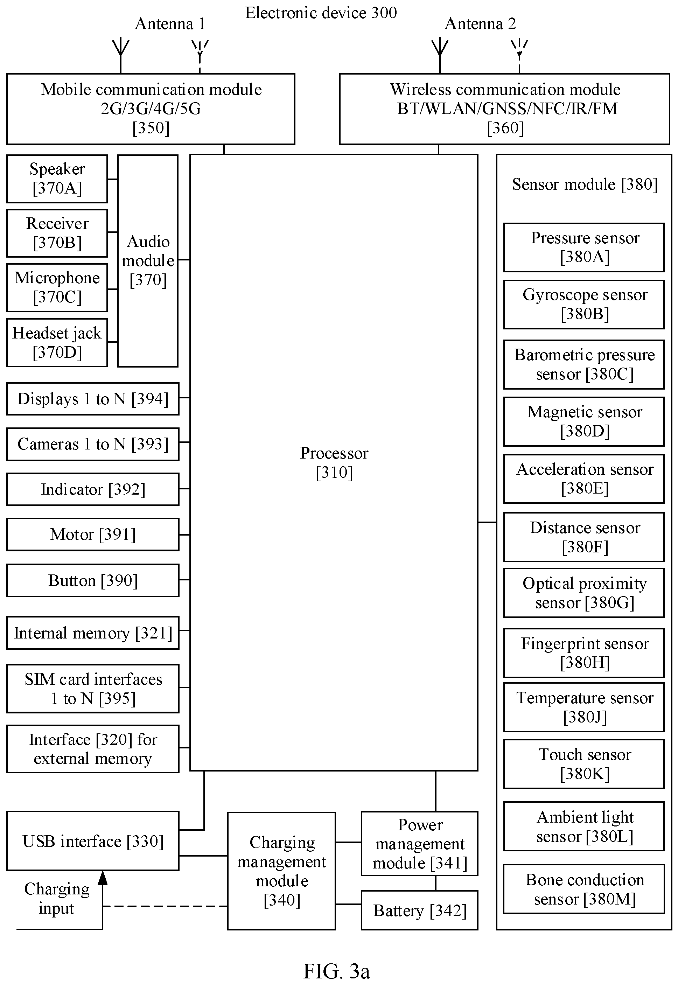

FIG. 3a is a diagram of a structure of an electronic device 300 according to an embodiment of this application. The electronic device 300 may include a processor 310, an interface 320 for external memory, an internal memory 321, a universal serial bus (Universal Serial Bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identity identification (Subscriber Identification Module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

The processor 310 may include one or more processing units. For example, the processor 310 may include an application processor (Application Processor, AP), a modem processor, a graphics processing unit (Graphics Processing Unit, GPU), an image signal processor ISP, a controller, a video codec, a digital signal processor (Digital Signal Processor, DSP), a baseband processor, and/or a neural-network processing unit NPU. Different processing units may be independent components, or may be integrated into one or more processors. For example, the processor 310 may be configured to perform the steps of the page turning method in embodiments of this application.

The processor 310 may generate an operation control signal based on instruction operation code and a time sequence signal, to complete control of instruction fetching and instruction execution.

A memory may be further disposed in the processor 310, and is configured to store instructions and data. In some embodiments, the memory in the processor 310 is a cache memory. The memory may store instructions or data just used or cyclically used by the processor 310. If the processor 310 needs to use the instructions or the data again, the processor 310 may directly invoke the instructions or the data from the memory. This avoids repeated access and reduces a waiting time of the processor 310, thereby improving system efficiency.

In some embodiments, the processor 310 may detect a change of a gaze point of the user based on an eye tracking technology. After determining that the gaze point of the user moves from the upper area to the lower area, the processor 310 may estimate remaining reading time required by the user to read page content in the lower area and use the remaining reading time as the page turning waiting time, and enter a waiting time window. After the waiting time window, when determining that the gaze point of the user moves from the lower area to the upper area again, the processor 310 may determine that a page turning intention of the user is detected, and further perform an automatic page turning operation. In this way, when the user decides to turn a page after reading the page content in the lower area, the user only needs to move the gaze point to the upper area, and the page can be automatically turned, without any mechanical movement of a hand of the user, thereby greatly alleviating fatigue and improving reading experience of the user.

In some embodiments, the processor 310 may detect a change of a gaze point of the user based on an eye tracking technology. In a case in which the user is accustomed to gazing at an upper part of the application interface, if it is determined that the gaze point of the user moves from the upper area to a lower area, it may be determined that a page scrolling speed is slower than a reading speed of the user. In this case, the page scrolling speed may be increased. In a case in which the user is accustomed to gazing at a lower part of the application interface, if it is determined that the gaze point of the user moves from the lower area to the upper area, it may be determined that the page scrolling speed is faster than the reading speed of the user. In this case, the page scrolling speed may be reduced. In this way, the page scrolling speed can be dynamically adjusted based on the reading speed of the user, so that the page scrolling speed matches a reading habit and the reading speed of the user, and the user does not need to manually adjust the page scrolling speed, thereby greatly improving reading experience of the user.

In some embodiments, the processor 310 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, and a subscriber identity module (Subscriber Identity Module, SIM) interface.

The MIPI interface may be configured to connect the processor 310 to a peripheral device, for example, the display 394 or the camera 393. The MIPI interface includes a camera serial interface (Camera Serial Interface, CSI), a display serial interface (Display Serial Interface, DSI), and the like. In some embodiments, the processor 310 communicates with the camera 393 through the CSI interface, to implement a photographing function of the electronic device 300. The processor 310 communicates with the display 394 through the DSI interface, to implement a display function of the electronic device 300.

The GPIO interface may be configured by software. The GPIO interface may be configured as a control signal or a data signal. In some embodiments, the GPIO interface may be configured to connect the processor 310 and the camera 393, the display 394, the wireless communication module 360, the audio module 370, the sensor module 380, and the like. The GPIO interface may alternatively be configured as an I2C interface, an I2S interface, a UART interface, an MIPI interface, or the like.

It can be understood that an interface connection relationship between modules illustrated in this embodiment of this application is merely an example for description, and does not constitute any limitation on the structure of the electronic device 300. In some other embodiments of this application, different interface connection manners in the foregoing embodiments or a combination of a plurality of interface connection manners may alternatively be used for the electronic device 300.

The electronic device 300 implements a display function by using the GPU, the display 394, the application processor, or the like. The GPU is a microprocessor for image processing, and is connected to the display 394 and the application processor. The GPU is configured to: perform mathematical and geometric computation, and render an image. The processor 310 may include one or more GPUs that execute program instructions to generate or change display information.

The display 394 is configured to display an image, a video, or the like. The display 394 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light Emitting Diode, AMOLED), a flexible light-emitting diode (Flex Light-Emitting Diode, FLED), a Miniled, a MicroLed, a Micro-oLed, a quantum dot light-emitting diode (Quantum Dot Light Emitting Diodes, QLED), or the like. In some embodiments, the electronic device 300 may include one or N displays 394, where N is a positive integer greater than 1.

The electronic device 300 may implement a photographing function through the ISP, the camera 393, the video codec, the GPU, the display 394, the application processor, and the like.

The ISP is configured to process data fed back by the camera 393. For example, during shooting, a shutter is pressed, and light is transmitted to a photosensitive element of the camera through a lens. The photosensitive element of the camera converts an optical signal into an electrical signal, and transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a static image or a video. An optical image of an object is generated through the lens, and is projected onto the photosensitive element. The photosensitive element may be a charge coupled device (Charge Coupled Device, CCD) or a complementary metal-oxide-semiconductor (Complementary Metal-Oxide-Semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 300 may include one or N cameras 393, where N is a positive integer greater than 1.

The NPU is a neural-network (Neural-Network, NN) computing processor. The NPU quickly processes input information by referring to a structure of a biological neural network, for example, a transfer mode between human brain neurons, and may further continuously perform self-learning. Applications such as intelligent cognition of the electronic device 300 may be implemented through the NPU, for example, image recognition, facial recognition, voice recognition, and text understanding.

The internal memory 321 may be configured to store computer-executable program code, and the computer-executable program code includes instructions. The internal memory 321 may include a program storage area and a data storage area. The program storage area may store an operating system, an application required by at least one function (for example, a sound playing function or an image playing function), and the like. The data storage area may store data (such as audio data and a phone book) created when the electronic device 300 is used, and the like. In addition, the internal memory 321 may include a high-speed random access memory, and may further include a non-volatile memory, for example, at least one magnetic disk storage device, a flash memory device, or a universal flash storage (Universal Flash Storage, UFS). The processor 310 runs instructions stored in the internal memory 321 and/or instructions stored in the memory disposed in the processor, to perform various function applications and data processing of the electronic device 300.

In some embodiments, the internal memory 321 may store instructions of the page turning method. The processor 310 runs the instructions of the page turning method, so that the processor 310 can detect a change of the gaze point of the user based on the eye tracking technology. After determining that the gaze point of the user moves from the upper area to the lower area, remaining reading time required by the user to read page content in the lower area may be estimated as the page turning waiting time, and a waiting time window is entered. After the waiting time window, when it is determined that the gaze point of the user moves from the lower area to the upper area again, it may be determined that a page turning intention of the user is detected, and further perform an automatic page turning operation. In this way, when the user decides to turn a page after reading the page content in the lower area, the user only needs to move the gaze point to the upper area, and the page can be automatically turned, without any mechanical movement of a hand of the user, thereby greatly alleviating fatigue and improving reading experience of the user.

In some embodiments, the processor 310 runs the instructions of the page turning method, so that the processor 310 can detect the change of the gaze point of the user based on the eye tracking technology. In a case in which the user is accustomed to gazing at an upper part of the application interface, if it is determined that the gaze point of the user moves from the upper part to a lower part, it may be determined that a page scrolling speed is slower than a reading speed of the user. In this case, the page scrolling speed may be increased. In a case in which the user is accustomed to gazing at a lower part of the application interface, if it is determined that the gaze point of the user moves from the lower area to the upper area, it may be determined that the page scrolling speed is faster than the reading speed of the user. In this case, the page scrolling speed may be reduced. In this way, the page scrolling speed can be dynamically adjusted based on the reading speed of the user, so that the page scrolling speed matches a reading habit and the reading speed of the user, and the user does not need to manually adjust the page scrolling speed, thereby greatly improving reading experience of the user.

The pressure sensor 380A is configured to sense a pressure signal, and may convert the pressure signal into an electrical signal. In some embodiments, the pressure sensor 380A may be disposed on the display 394. There are a plurality of types of pressure sensors 380A such as a resistive pressure sensor, an inductive pressure sensor, and a capacitive pressure sensor. The capacitive pressure sensor may include at least two parallel plates made of conductive materials. When a force is applied to the pressure sensor 380A, capacitance between electrodes changes. The electronic device 300 determines pressure strength based on the change of the capacitance. When a touch operation is performed on the display 394, the electronic device 300 detects intensity of the touch operation through the pressure sensor 380A. The electronic device 300 may also calculate a touch position based on a detection signal of the pressure sensor 380A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 380B may be configured to determine a motion posture of the electronic device 300. In some embodiments, an angular velocity of the electronic device 300 about three axes (namely, x, y, and z axes) may be determined by using the gyroscope sensor 380B. The gyroscope sensor 380B may be configured to implement image stabilization during photographing. For example, when the shutter is pressed, the gyroscope sensor 380B detects an angle at which the electronic device 300 jitters, calculates, based on the angle, a distance for which a lens module needs to compensate, and allows the lens to cancel the jitter of the electronic device 300 through reverse motion, to implement image stabilization. The gyroscope sensor 380B may also be used in a navigation scenario and a motion-controlled gaming scenario.

In some embodiments, when the user rotates the electronic device 300, the gyroscope sensor 380B may determine a motion posture of the electronic device 300. In this way, the processor 310 determines, based on data provided by the gyroscope sensor 380B, that the electronic device 300 processes the landscape mode or the portrait mode.

The distance sensor 380F is configured to measure a distance. The electronic device 300 may measure a distance in an infrared manner or a laser manner. In some embodiments, in a photographing scenario, the electronic device 300 may measure a distance by using the distance sensor 380F, to implement quick focusing.

The ambient light sensor 380L is configured to sense ambient light brightness. The electronic device 300 may adaptively adjust brightness of the display 394 based on the sensed ambient light brightness. The ambient light sensor 380L may also be configured to automatically adjust white balance during photographing. The ambient light sensor 380L may further cooperate with the optical proximity sensor 380G to detect whether the electronic device 300 is in a pocket, to avoid an accidental touch.

The touch sensor 380K is also referred to as a "touch component". The touch sensor 380K may be disposed on the display 394, and the touch sensor 380K and the display 394 form a touchscreen, which is also referred to as a "touchscreen". The touch sensor 380K is configured to detect a touch operation on or near the touch sensor 380K. The touch sensor may transfer the detected touch operation to the application processor to determine a type of the touch event. The display 394 may provide a visual output related to the touch operation. In some other embodiments, the touch sensor 380K may alternatively be disposed on a surface of the electronic device 300 at a position different from that of the display 394.

A software system of the electronic device 300 may use a layered architecture, an event-driven architecture, a microkernel architecture, a microservice architecture, or a cloud architecture. In this embodiment of this application, an Android system of a layered architecture is used as an example to describe the software structure of the electronic device 300. A type of an operating system of the electronic device is not limited in this application. For example, the operating system is an Android system, a Linux system, a Windows system, an iOS system, a Harmony Operating System (Harmony Operating System, HarmonyOS) system, or the like.

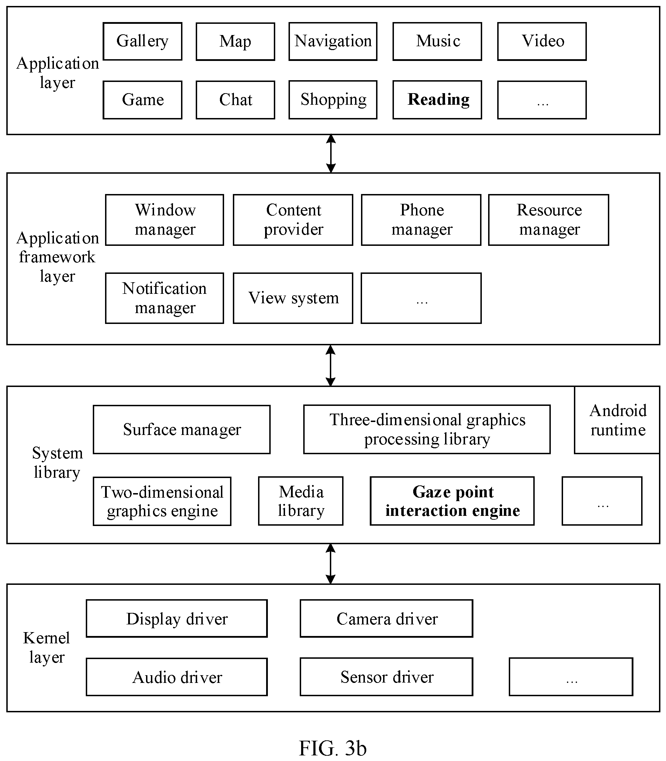

FIG. 3b is a block diagram of a software structure of an electronic device 300 according to an embodiment of this application.

As shown in FIG. 3b, a layered architecture divides software into several layers, and each layer has a clear role and task. The layers communicate with each other through a software interface. In some embodiments, the Android system is divided into four layers, which are an application layer (APP), an application framework (APP Framework) layer, an Android runtime (Android Runtime) and system library (Libraries), and a kernel layer (Kernel) from top to bottom.

The application layer may include a series of application packages.

As shown in FIG. 3b, the application packages may include application APPs such as gallery, map, navigation, music, video, game, chat, shopping, and reading. The application layer may further include another application APP other than the applications shown in FIG. 3b, for example, camera, calendar, call, WLAN, Bluetooth, or SMS message. Details are not described in embodiments of this application.

The application framework layer provides an application programming interface (Application Programming Interface, API) and a programming framework for the applications at the application layer. The application framework layer includes some predefined functions.

As shown in FIG. 3b, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application program. The data may include a video, an image, an audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function of the electronic device 300, for example, management of a call status (including answering, declining, or the like).

The resource manager provides various resources such as a localized character string, an icon, an image, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (Surface Manager), a media library (Media Libraries), a three-dimensional graphics processing library (for example, OpenGLES), a 2D graphics engine (for example, SGL), and a gaze point interaction engine.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

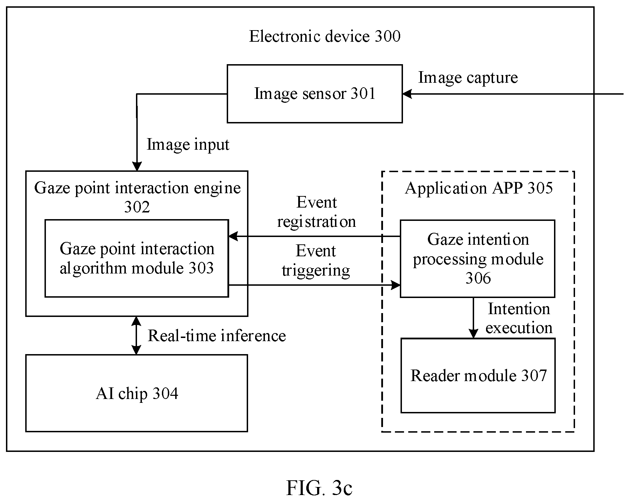

The following describes, with reference to FIG. 3c, a system architecture used by the electronic device 300 according to an embodiment of this application.

With reference to FIG. 3c in the specification, FIG. 3c is a diagram of a system architecture of an electronic device according to an embodiment of this application. As shown in FIG. 3c, the system architecture used by the electronic device 300 in this embodiment of this application may include an image sensor 301, a gaze point interaction engine 302, a gaze point interaction algorithm module 303, an artificial intelligence (Artificial Intelligence, AI) chip 304, an application APP 305, a gaze intention processing module 306, and a reader module 307.

The image sensor 301 may be a front low-power-consumption camera, and is configured to capture a facial image of a user and output the image.

The gaze point interaction engine 302 is an execution software module for gaze point interaction, and is configured to receive the facial image captured by the image sensor 301, and input the facial image and a related parameter into the gaze point interaction algorithm module 303 for inference, to recognize a gaze point of the user.

The gaze point interaction algorithm module 303 may include an inference model that is pre-trained and that is used to recognize the gaze point. The model may run in the AI chip 304 and an inference container, and perform inference on the input facial image by consuming system computing power, to recognize the gaze point of the user.

The AI chip 304 may be integrated into a mainboard of the electronic device 300, and is configured to provide AI computing power and operators.

The application APP 305 is an application running on the electronic device 300, and may mainly include reading APPs such as news information, an e-book, a magazine, and a comic. A main adaptation feature of this type of APP is that an entire screen area may be used as a reading interface, and images and texts are arranged and laid out on a screen from top to bottom according to a natural formatting rule. A page turning operation from left to right or from top to bottom is supported on an image and text part that exceeds the screen area. It should be noted that, in some possible embodiments, the application APP may further include another type of APP, for example, a browser APP or an information feed APP. This is not specifically limited in this embodiment of this application.

The gaze intention processing module 306 is a software module that runs in the reading APP and that processes a gaze point intention. The module may assist in event registration and listening with the gaze point interaction engine 302 in an external operating system of the APP, and may further assist in calculating an information amount and a reading speed of a reading page and page turning execution with the reader module 307 in the APP.

The reader module 307 runs in the reading APP, provides formatting and rendering of reading page content, and provides operations on the reading page, such as page turning. The reader module 307 may further expose an API to the outside, to query a parameter related to the reading page, for example, an interface for querying an information amount of a page and an interface for executing page type hybrid page turning.

It may be understood that the structure shown in this embodiment of this application does not constitute a specific limitation on the electronic device 300. In some other embodiments of this application, the electronic device 300 may include more or fewer components than those shown in the figure, or a combination of a part of the components, or splits from a part of the components, or an arrangement of different components. The components shown in the figure may be implemented by hardware, software, or a combination of software and hardware.

The following describes in detail a specific procedure of the page turning method provided in embodiments of this application.

The page turning method provided in this embodiment of this application may be applied to an electronic device having the hardware structure shown in FIG. 3a and the software structure shown in FIG. 3b, or an electronic device having a similar hardware structure and software structure, such as including more or fewer components than those shown in the figure, having some components combined, having some components split, or having different component arrangements.

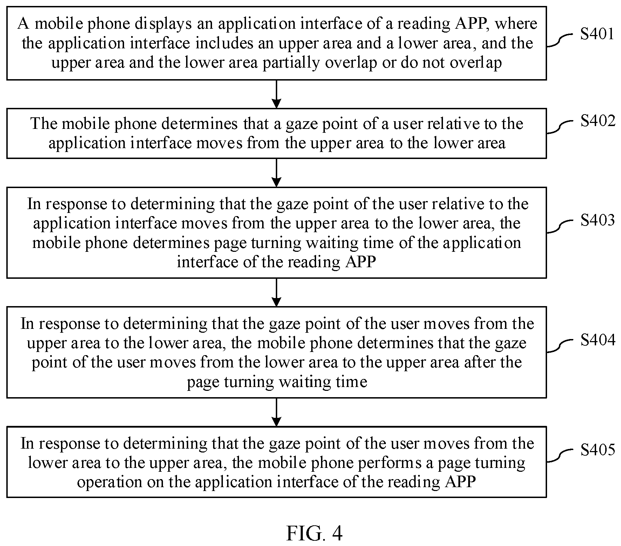

The following uses a mobile phone as an example to describe in detail a page turning method according to an embodiment of this application. The mobile phone may be in a portrait display mode, and a plurality of APPs are installed in the mobile phone, where some or all of the APPs are APPs that provide information for the user. FIG. 4 is a flowchart of a page turning method according to an embodiment of this application. The method may include steps S401 to S405.

S401: The mobile phone displays an application interface of a reading APP (an example of a first application), where the application interface includes an upper area (an example of a first display area) and a lower area (an example of a second display area), and the upper area and the lower area partially overlap or do not overlap.

In this embodiment of this application, the first application may be any application that is installed in the mobile phone and that can provide information for the user. First applications may be various types of applications, including but not limited to a reading APP, a browser APP, an information feed APP, and the like. In this embodiment of this application, an example in which the reading APP is used as the first application is used for description. However, this application is not limited thereto. The reading APP may be an APP in a page turning mode such as left and right page turning, simulation page turning, overlay page turning, or upper and lower half-screen page turning.

In this embodiment of this application, the upper area and the lower area jointly form the application interface of the reading APP. The upper area and the lower area may partially overlap, or may not overlap. A page of the reading APP, for example, a home page of the reading APP or a reading page of a book in the reading APP, may be displayed on the application interface of the reading APP. This is not specifically limited in this application.

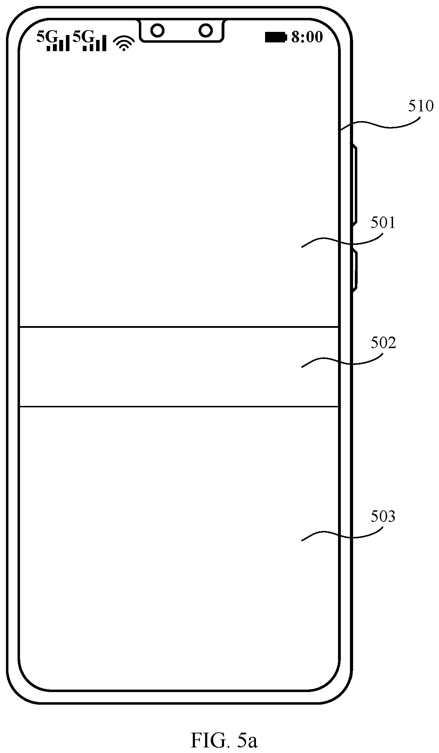

In a possible embodiment, with reference to FIG. 5a in the specification, FIG. 5a is a diagram of an application interface of a reading APP according to an embodiment of this application. As shown in FIG. 5a, in a portrait display mode of a mobile phone, an upper area of an application interface 510 may include an upper grid 501 and a transition area 502, and a lower area of the application interface 510 may include the transition area 502 and a lower grid 503. In other words, the upper area and the lower area of the application interface 510 may partially overlap, and the overlapping area is the transition area 502.

The transition area 502 may be disposed at a middle position of the application interface, and a size of the transition area 502 may affect sensitivity of switching the gaze point of the user between the upper area and the lower area. Specifically, a larger transition area 502 indicates lower sensitivity, and a smaller transition area 502 indicates higher sensitivity.

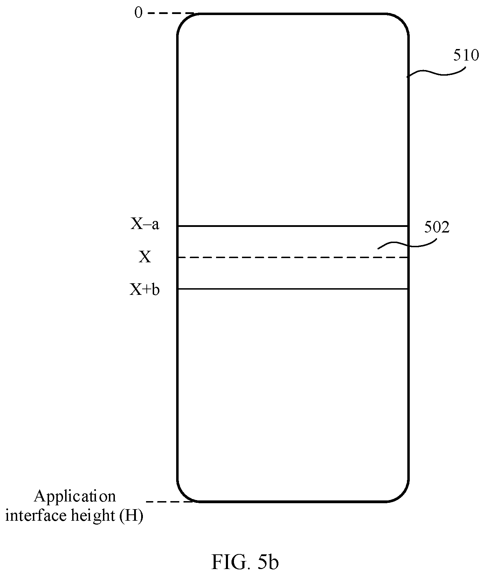

For example, with reference to FIG. 5b in the specification, FIG. 5b is a diagram of a transition area 502 according to an embodiment of this application. As shown in FIG. 5b, the transition area 502 may include an area whose width is [X-a, X+b] in the middle of the application interface 510, where X represents a half height position of the application interface 510. The size of the transition area 502 may be determined based on values of a and b, and the values of a and b may be determined based on an actual requirement. For example, the values of a and b may be transferred by the reading APP when the reading APP registers a gaze point switching fence event or preset by a system. This is not specifically limited in this embodiment of this application.

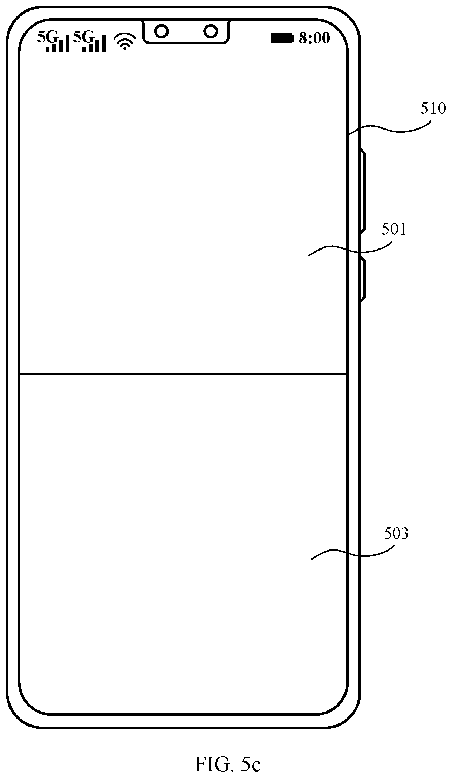

In another possible embodiment, with reference to FIG. 5c in the specification, FIG. 5c is a diagram of an application interface of a reading APP according to another embodiment of this application. As shown in FIG. 5c, the upper area of the application interface 510 may include only the upper grid 501, and the lower area of the application interface 510 may include only the lower grid 503. In other words, the upper area and the lower area of the application interface 510 may not overlap.

It should be noted that, in the foregoing embodiment, a display manner of the mobile phone is a portrait display mode. In another embodiment of this application, a landscape display mode may alternatively be used. In the landscape display mode of the mobile phone, an upper area of the application interface is the first display area, and a lower area of the application interface is the second display area. Alternatively, in the landscape display mode of the mobile phone, an area on a left side of the application interface is the first display area, and an area on a right side of the application interface is the second display area.

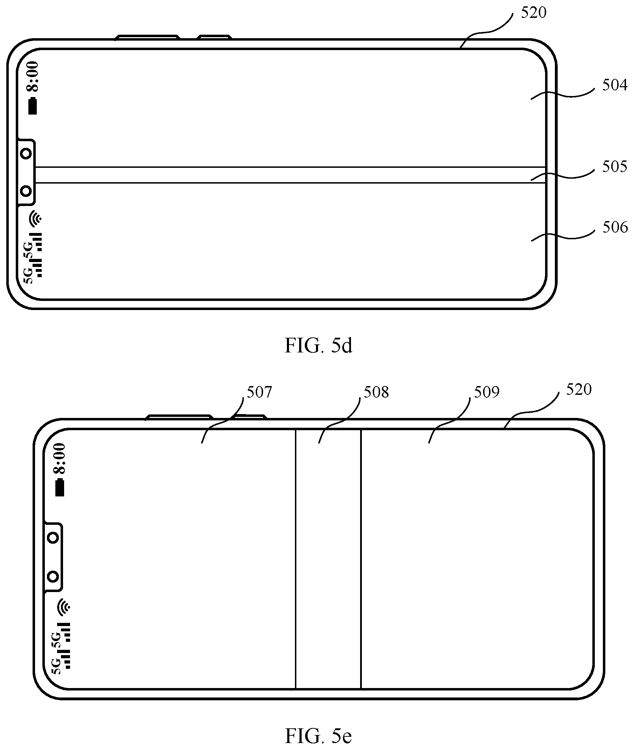

In a possible embodiment, FIG. 5d is a diagram of an application interface of a reading APP according to still another embodiment of this application. As shown in FIG. 5d, in the landscape display mode of the mobile phone, a position relationship between two areas of the application interface may remain unchanged, and is still an upper and lower relationship. In other words, an application interface 520 may include an upper area and a lower area. The upper area of the application interface 520 may include an upper grid 504 and a transition area 505, and the lower area of the application interface 520 may include the transition area 505 and a lower grid 506. In other words, the upper area and the lower area of the application interface 520 may partially overlap, and the overlapping area is the transition area 505.

In another possible embodiment, in the landscape display mode of the mobile phone, the upper area of the application interface 520 may alternatively include only the upper grid 504, and the lower area of the application interface 520 may alternatively include only the right grid 506. In other words, the upper area and the lower area of the application interface 520 may not overlap.

In another possible embodiment, FIG. 5e is a diagram of an application interface of a reading APP according to yet another embodiment of this application. As shown in FIG. 5e, in the landscape display mode of the mobile phone, a position relationship between two areas of the application interface may change to a left and right relationship. In other words, the application interface 520 may include a left area (as another example of the first display area) and a right area (as another example of the second display area). The left area of the application interface 520 may include a left grid 507 and a transition area 508, and the right area of the application interface 520 may include the transition area 508 and a right grid 509. In other words, the left area and the right area of the application interface 520 may partially overlap, and the overlapping area is the transition area 508.

In another possible embodiment, in the landscape display mode of the mobile phone, the left area of the application interface 520 may alternatively include only the left grid 507, and the right area of the application interface 520 may alternatively include only the right grid 509. In other words, the left area and the right area of the application interface 520 may not overlap.

S402: The mobile phone determines that the gaze point of the user relative to the application interface moves from the upper area to the lower area.

In this embodiment of this application, the mobile phone may obtain a facial image of the user in real time, and perform inference based on the facial image of the user, to recognize the gaze point of the user relative to the application interface, and determine a display area in which the gaze point is located, to determine whether the gaze point of the user moves from the upper area to the lower area. When it is determined that a display area in which the gaze point of the user is currently located is the lower area, and it is determined that a display area in which the gaze point of the user is previously located is the upper area, it may be determined that the gaze point of the user moves from the upper area to the lower area.

Specifically, the mobile phone may recognize a face and an eye based on inference of a gaze point interaction algorithm model, determine a relationship between the gaze point of the user and a display area, and detect switching of the gaze point of the user between the upper area and the lower area with reference to the display area in which the gaze point of the user is previously located. The gaze point interaction algorithm model may be predetermined based on an actual requirement. This is not specifically limited in this embodiment of this application.

S403: In response to determining that the gaze point of the user relative to the application interface moves from the upper area to the lower area, the mobile phone determines page turning waiting time of the application interface of the reading APP.

In this embodiment of this application, for a reading scenario, an area in which an intention mainly needs to be recognized includes a top (representing start) of a page and a bottom (representing completion) of the page, and there is no actual intention in a middle area. When reading, the user usually reads content of the lower part of the page after reading content of the upper part of the page. Therefore, when determining that the user reads the content of the lower part of the page, the mobile phone may dynamically estimate, based on a real-time reading speed of the user, time required for the user to read the content of the lower part of the page, that is, estimate the page turning waiting time. The mobile phone may determine reading progress based on reading time. After determining the page turning waiting time of the user, the mobile phone may determine that the user has read the lower part of the page content (that is, the bottom of the page is read).

Specifically, after determining that the gaze point of the user moves from the upper area to the lower area, the mobile phone may determine that the user switches from reading the page content in the upper area to reading the page content in the lower area. In this case, the mobile phone may estimate, based on a page reading speed of reading the page content in the upper area, remaining reading time required for reading the page content in the lower area, and then determine the page turning waiting time. A specific process of determining the page turning waiting time is described in detail subsequently.

S404: In response to determining that the gaze point of the user moves from the upper area to the lower area, the mobile phone determines that the gaze point of the user moves from the lower area to the upper area after the page turning waiting time has elapsed.

In this embodiment of this application, in response to determining that the gaze point of the user moves from the upper area to the lower area, the mobile phone may determine the reading progress, to determine whether the user reads all content on the page (that is, the bottom of the page is read). Specifically, the mobile phone may determine whether current waiting time t reaches the page turning waiting time T after determining that the gaze point of the user moves from the upper area to the lower area. If the current waiting time t reaches the page turning waiting time T, it may be determined that the user reads all the content on the page. If the current waiting time t does not reach the page turning waiting time T, it may be determined that the user has not read all the content on the page. In this case, the mobile phone continues to wait.

In this embodiment of this application, after determining that the user reads all the content on the page, the mobile phone may determine a page turning intention, to perform automatic page turning when recognizing an intention that the user needs to turn a page. Specifically, the mobile phone may determine whether the gaze point of the user moves from the lower area to the upper area. If the gaze point of the user moves from the lower area to the upper area, the mobile phone may determine that the intention of the user to turn the page is recognized. If the gaze point of the user does not move from the lower area to the upper area, the mobile phone may continue to wait.

Specifically, for specific content of detecting that the gaze point of the user moves from the lower area to the upper area, refer to related content of detecting that the gaze point of the user moves from the upper area to the lower area in step S402. Details are not described herein again in this embodiment of this application. When it is determined that the display area in which the gaze point of the user is currently located is the upper area, and it is determined that the display area in which the gaze point of the user is previously located is the lower area, it may be determined that the gaze point of the user moves from the lower area to the upper area.

S405: In response to determining that the gaze point of the user moves from the lower area to the upper area, the mobile phone performs a page turning operation on the application interface of the reading APP.

In this embodiment of this application, when determining that the gaze point of the user moves from the lower area to the upper area, the mobile phone may determine that the intention of the user to turn the page is recognized. In this case, the mobile phone may perform automatic page turning. Specifically, the mobile phone may perform the page turning operation, to display page content of a next page of the current page on the application interface of the reading APP.

It may be understood that the page turning method provided in this embodiment of this application may be used for reading APPs with a plurality of page turning modes, for example, including but not limited to page turning modes such as left and right page turning, simulation page turning, overlay page turning, and half-screen page turning. For the reading APPs with the different page turning modes, page turning operations may be different.

For example, for a reading APP with a left and right page turning mode, an action of turning one page left or right may be performed, to display page content of a next page of a current page on an application interface of the reading APP. For a reading APP with a simulation page turning mode, a simulation page turning action may be performed, to display page content of a next page of a current page on an application interface of the reading APP. For a reading APP with an overlay page turning mode, an action of overlaying one page to turn a page may be performed, to overlay page content of a next page of a current page on page content of the current page. For a reading APP with an upper and lower half-screen page turning mode, an action of flipping a half-screen and overlaying to turn a page may be performed, so that upper page content of a next page of a current page is displayed on an upper half page, and lower page content of the next page of the current page is displayed on a lower half page.

It should be noted that details of performing the page turning operation on the application interface of the reading APP are not described herein in this embodiment of this application.

In a possible embodiment, performing the page turning operation on the application interface of the reading APP may include: in response to determining that the gaze point of the user moves from the lower area to the upper area, performing the page turning operation on the application interface of the reading APP after 200 ms (an example of third preset time).

In a possible embodiment, the page turning method may further include: Within 200 ms, in response to determining that the gaze point of the user moves from the upper area to the lower area, the mobile phone skips performing the page turning operation on the application interface of the reading APP.

In this embodiment of this application, there is the following recognition result jump scenario: After the user gazes at the lower area of the application interface, and it is determined that the gaze point of the user moves from the upper area to the lower area, the current waiting time t reaches the page turning waiting time T, and the user does not look up, but an error occurs in algorithm recognition, resulting in a jump of the gaze point of the user from down to up and then down. In this scenario, page turning is triggered by mistake, affecting user experience. Therefore, to avoid such a jump scenario, a page turning delay of 200 ms may be added.

If the gaze point of the user does not move from the upper area to the lower area within the delay time, it may be considered that the intention of the user to turn a page is true. In this case, the page turning operation may be performed. If the gaze point of the user moves from the upper area to the lower area again within the delay time, it may be considered that the intention of the user to turn the page is misrecognized. In this case, the page turning operation is not performed.

It should be noted that the foregoing example in which 200 ms is used as the third preset time is merely an example implementation. In actual application, the third preset time may alternatively be set to another value. This is not specifically limited in this embodiment of this application.

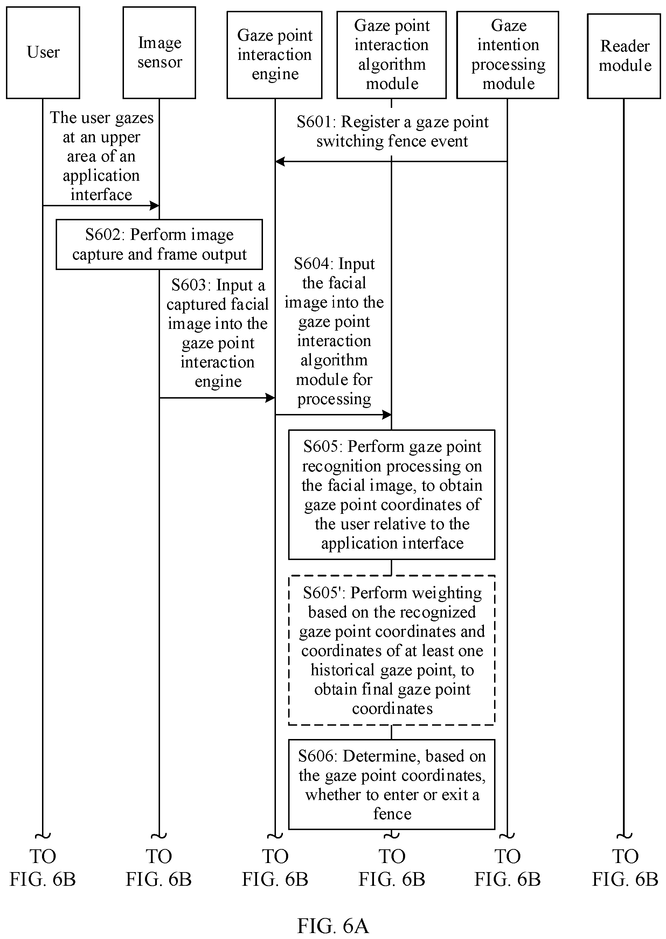

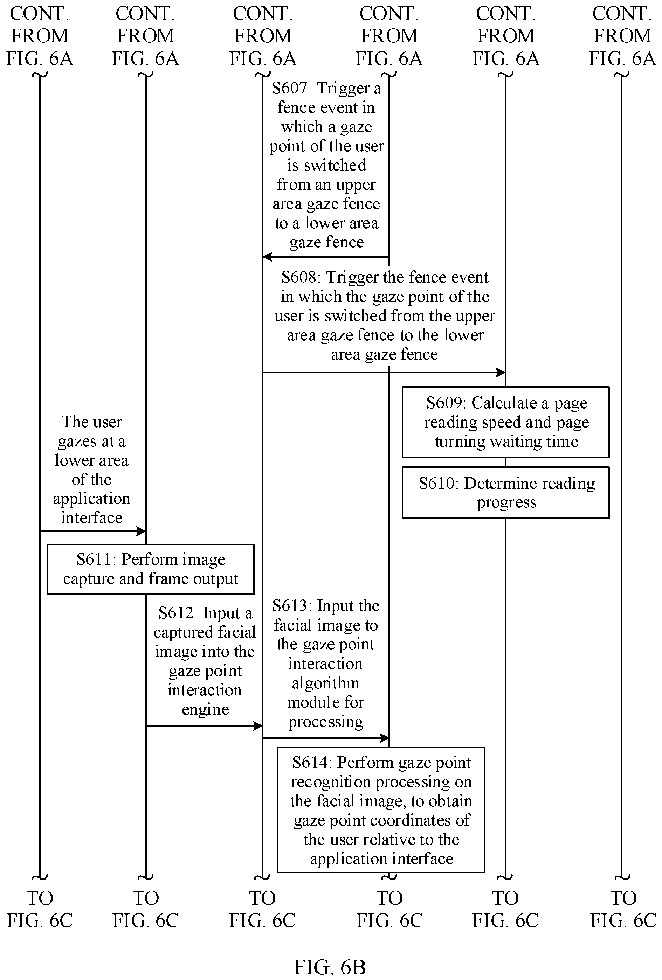

The following further describes the page turning method provided in embodiments of this application with reference to a system architecture of a mobile phone and modules in the system architecture. FIG. 6A to FIG. 6C are a flowchart of a page turning method according to a specific embodiment of this application, and is further description of the embodiment shown in FIG. 4. The method may include steps S601 to S621.

S601: A gaze intention processing module may register a gaze point switching fence event with a gaze point interaction engine.

Specifically, when the user uses a reading APP, a reader module may display an application interface of the reading APP. In this case, the gaze intention processing module may register gaze fences of two display areas of the application interface and the gaze point switching fence event of the user. Specifically, an upper area gaze fence and a lower area gaze fence may be registered, and a fence event in which a gaze point of the user is switched from the upper area gaze fence to the lower area gaze fence and a fence event in which the gaze point of the user is switched from the lower area gaze fence to the upper area gaze fence may be registered.

S602: When the user gazes at an upper area of the application interface, an image sensor may perform image capture and frame output in real time, to obtain a facial image of the user.

Specifically, the image sensor may be a front low-power-consumption camera of the mobile phone, for example, a low-power-consumption camera whose frames per second (Frames Per Second, FPS) are 10 fps to 20 fps. The low-power-consumption camera may run on a security chip to ensure user privacy security.

It may be understood that, by using the low-power-consumption camera, compared with manual page turning, power consumption is increased by no more than 5%, and accuracy of recognizing an area in which the gaze point of the user is located is high (greater than 95%), so that a power consumption problem based on an image recognition technology can be effectively resolved. Even during long time reading, impact on a battery life of the mobile phone is small.

It should be noted that, in actual application, a low-power-consumption mode of the front camera of the mobile phone may also be directly enabled to implement the page turning method in this embodiment of this application. This is not specifically limited in this embodiment of this application.

S603: The image sensor may input the captured facial image to the gaze point interaction engine.

Correspondingly, the gaze point interaction engine may receive the facial image of the user sent by the image sensor.

S604: The gaze point interaction engine may input the facial image of the user to a gaze point interaction algorithm module for processing.

Specifically, after receiving the facial image of the user, the gaze point interaction engine may input the facial image and related parameters (for example, parameters such as a position and an angle of the image sensor relative to an eye of the user) to the gaze point interaction algorithm module.

S605: The gaze point interaction algorithm module may perform gaze point recognition processing on the facial image, to obtain gaze point coordinates of the user relative to the application interface.

Specifically, the gaze point interaction algorithm module may recognize a face and an eye based on inference of the gaze point interaction algorithm model. A specific recognition method is described in detail below.

S606: The gaze point interaction algorithm module may determine, based on the gaze point coordinates, whether to enter or exit a fence, to determine whether to trigger a fence event in which the gaze point of the user is switched from the upper area gaze fence to the lower area gaze fence (that is, determine that the gaze point of the user moves from the upper area to the lower area).

Specifically, the gaze point interaction algorithm module may determine a relationship between the recognized gaze point of the user and a display area, and detect switching of the gaze point of the user in the upper area and lower area with reference to the display area in which the gaze point of the user is previously located. When it is determined that the display area in which the gaze point of the user is currently located is the lower area, and it is determined that the display area in which the gaze point of the user is previously located is the upper area, it may be determined that the gaze point of the user moves from the upper area to the lower area. When it is determined that the display area in which the gaze point of the user is currently located is the upper area, and it is determined that the display area in which the gaze point of the user is previously located is the lower area, it may be determined that the gaze point of the user moves from the lower area to the upper area.

Specifically, when the gaze point interaction algorithm module determines that the mobile phone is currently in the portrait display mode, the gaze point interaction algorithm module may use a gaze point interaction algorithm in an upper and lower area recognition mode to recognize the gaze point of the user and determine the display area of the application interface in which the gaze point is located. In the upper and lower area recognition mode, the mobile phone may directly determine, by using a gaze point interaction algorithm, whether the display area that is of the application interface and on which the gaze point of the user is located is the upper area or the lower area of the display interface.

S607: When it is determined that the fence event in which the gaze point of the user is switched from the upper area gaze fence to the lower area gaze fence is triggered, the gaze point interaction algorithm module may further report the fence event to the gaze point interaction engine.

Correspondingly, the gaze point interaction engine may receive the fence event in which the gaze point of the user is switched from the upper area gaze fence to the lower area gaze fence.

S608: The gaze point interaction engine may report the fence event in which the gaze point of the user is switched from the upper area gaze fence to the lower area gaze fence to the gaze intention processing module.

Correspondingly, the gaze intention processing module may receive the fence event in which the gaze point of the user is switched from the upper area gaze fence to the lower area gaze fence.

It should be noted that step S602 to step S608 correspond to step S402 in the embodiment shown in FIG. 4.

S609: In response to the fence event in which the gaze point of the user is switched from the upper area gaze fence to the lower area gaze fence, the gaze intention processing module may calculate a page reading speed and page turning waiting time.

Specifically, the gaze intention processing module may estimate, based on a page reading speed at which the user reads the page content in the upper area, remaining reading time required for reading the page content in the lower area, and then determine the page turning waiting time. A method for determining the page turning waiting time is described in detail subsequently.

It should be noted that step S609 corresponds to step S403 in the embodiment shown in FIG. 4.

S610: In response to the fence event in which the gaze point of the user is switched from the upper area gaze fence to the lower area gaze fence, the gaze intention processing module may determine reading progress.

Specifically, after receiving the fence event in which the gaze point of the user is switched from the upper area gaze fence to the lower area gaze fence, the gaze intention processing module may further determine the reading progress based on the page turning waiting time obtained through calculation, to determine whether the user reads all content of the page.

S611: When the user gazes at the lower area of the application interface, the image sensor may perform image capture and frame output in real time, to obtain the facial image of the user.

S612: The image sensor may input the captured facial image to the gaze point interaction engine.

Correspondingly, the gaze point interaction engine may receive the facial image of the user sent by the image sensor.

S613: The gaze point interaction engine may input the facial image of the user to the gaze point interaction algorithm module for processing.

S614: The gaze point interaction algorithm module may perform gaze point recognition processing on the facial image, to obtain the gaze point coordinates of the user relative to the application interface.

S615: The gaze point interaction algorithm module may determine, based on the gaze point coordinates, whether to enter or exit a fence, to determine whether to trigger the fence event in which the gaze point of the user is switched from the lower area gaze fence to the upper area gaze fence (that is, determine that the gaze point of the user moves from the lower area to the upper area).

S616: When determining that the fence event in which the gaze point of the user is switched from the lower area gaze fence to the upper area gaze fence is triggered, the gaze point interaction algorithm module may further report the fence event to the gaze point interaction engine.

Correspondingly, the gaze point interaction engine may receive the fence event in which the gaze point of the user is switched from the lower area gaze fence to the upper area gaze fence.

It should be noted that for specific content of step S611 to step S616, refer to related content of step S602 to step S607. Details are not described herein again in this embodiment of this application.

S617: The gaze point interaction engine may further report the fence event in which the gaze point of the user is switched from the lower area gaze fence to the upper area gaze fence to the gaze intention processing module.

Correspondingly, the gaze intention processing module may receive the fence event in which the gaze point of the user is switched from the lower area gaze fence to the upper area gaze fence.

S618: The gaze intention processing module may determine a page turning intention.

Specifically, after determining that the user has read all the content on the page and receiving the fence event in which the gaze point of the user is switched from the lower area gaze fence to the upper area gaze fence, the gaze intention processing module may determine that the intention of the user to turn a page is recognized.

In an actual application, in a process of determining the page turning intention, the gaze intention processing module may enter a waiting time window whose duration is the page turning waiting time T after receiving the fence event in which the gaze point of the user is switched from the upper area gaze fence to the lower area gaze fence. The page turning intention is determined only after the waiting time window (that is, after the current waiting time t reaches the page turning waiting time T), and the page turning action is performed in response to the fence event in which the gaze point of the user is switched from the lower area gaze fence to the upper area gaze fence, to reduce impact of a gaze point jump. In the waiting time window (that is, before the current waiting time t reaches the page turning waiting time T), even if the fence event in which the gaze point of the user is switched from the lower area gaze fence to the upper area gaze fence is received, page turning is not performed.

It should be noted that step S610 to step S618 correspond to step S404 in the embodiment shown in FIG. 4.

S619: When receiving the fence event in which the gaze point of the user is switched from the lower area gaze fence to the upper area gaze fence, the gaze intention processing module may perform event smooth suppression.

Specifically, after receiving the fence event in which the gaze point of the user is switched from the lower area gaze fence to the upper area gaze fence, the gaze intention processing module may enter a delayed execution time window of 200 ms. If no fence event in which the gaze point of the user is switched from the upper area gaze fence to the lower area gaze fence is received in the delayed execution time window, it is considered that the intention of the user to turn the page is true.

Specifically, in the delayed execution time window, if the fence event in which the gaze point of the user is switched from the upper area gaze fence to the lower area gaze fence is received again, it may be considered that a previously received fence event in which the gaze point of the user is switched from the lower area gaze fence to the upper area gaze fence is misrecognized, and needs to be suppressed. In other words, the gaze intention processing module may skip performing the page turning operation on the application interface of the reading APP, and wait for a next fence event in which the gaze point of the user is switched from the lower area gaze fence to the upper area gaze fence.

S620: If it is determined that the intention of the user to turn the page is true, the gaze intention processing module may send a page turning instruction to the reader module.

Correspondingly, the reader module may receive the page turning instruction sent by the gaze intention processing module.

S621: The reader module may perform, in response to the page turning instruction, the page turning operation on the application interface of the reading APP.

It should be noted that step S619 to step S621 correspond to step S405 in the embodiment shown in FIG. 4. For other content in step S601 to step S621, refer to related content in the embodiment shown in FIG. 4. Details are not described herein again in this embodiment of this application.

In actual application, because the low-power-consumption camera is used in this embodiment of this application, due to factors such as a sampling rate, image definition, a camera position, an angle between a camera and an eye, an eye feature of a user, light, and power consumption of the gaze point interaction algorithm, gaze point recognition accuracy cannot reach a pixel level, and recognition accuracy deviation of some areas on the screen is large. In an area with a large deviation, the gaze point recognition algorithm may cause a sudden jump of recognition coordinates, and an abnormal jump event may interfere with recognition of a formal intention of the user.

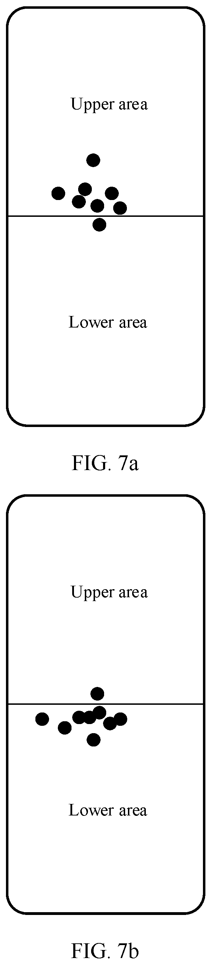

For example, with reference to FIG. 7a in the specification, FIG. 7a is a diagram of a gaze point jump according to an embodiment of this application. As shown in FIG. 7a, when the user gazes at the upper area, a jump problem of some gaze points may occur (that is, in a time window, the gaze point of the user is recognized as mainly concentrated in the upper area, but some gaze points are recognized as in the lower area). With reference to FIG. 7b in the specification, FIG. 7b is a diagram of a gaze point jump according to another embodiment of this application. As shown in FIG. 7b, similar to the upper area, when the user gazes at the lower area, due to a constraint of recognition accuracy, a jump problem of some gaze points may still occur (that is, in a time window, the gaze point of the user is recognized as mainly concentrated in the lower area, but some gaze points are recognized as in the upper area).

To resolve the gaze point jump, in a possible embodiment, a transition area may be set at a middle position of the application interface, and both the upper area and the lower area of the application interface include the transition area. When the gaze point of the user falls in a middle transition area, the gaze point interaction algorithm module and the gaze point interaction engine suppress triggering of a gaze point switching fence event. That is, as shown in FIG. 5a, when it is determined that the gaze point of the user falls in the middle transition area 502, regardless of whether the gaze point of the user falls in the upper grid 501 or the lower grid 503 (in a landscape display mode of the mobile phone, the gaze point may fall in the left grid or the right grid), the gaze point switching fence event is not triggered.

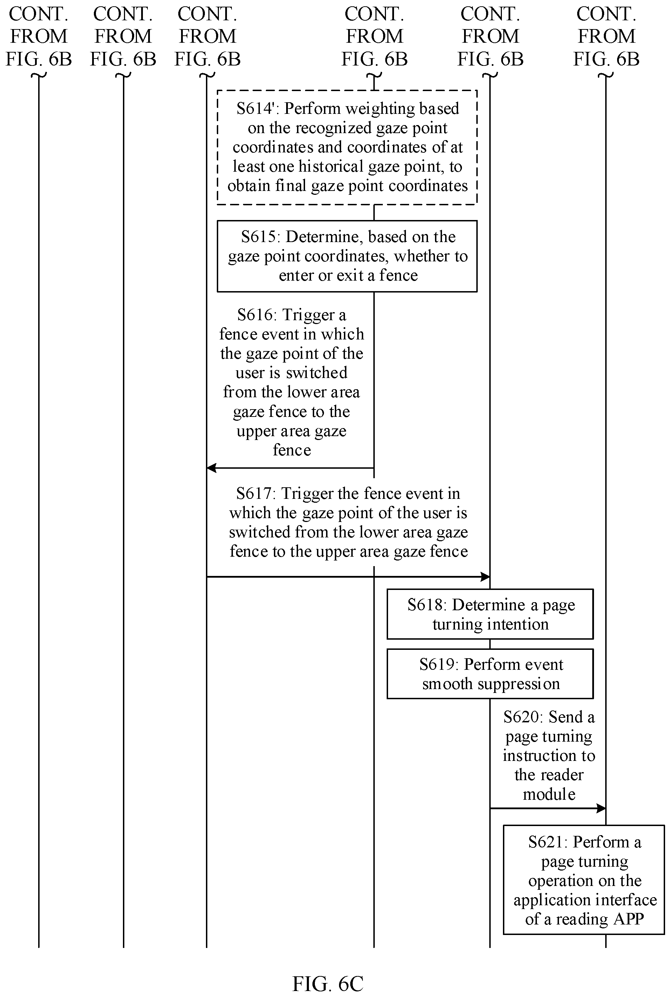

In addition to setting the transition area, in a possible embodiment, multi-frame smooth processing may be further performed when coordinates of a gaze point are determined. In other words, both the display area in which the gaze point of the user is currently located and the display area in which the gaze point of the user is previously located may be determined based on at least one frame of facial image of the user. Specifically, as shown in FIG. 6A to FIG. 6C, before step S606, step S605' (shown by dashed lines in FIG. 6A) may be further performed, and/or before step S615, step S614' (shown by dashed lines in FIG. 6C) may be further performed. In other words, the gaze point interaction algorithm module may perform weighting based on the recognized gaze point coordinates and coordinates of at least one historical gaze point, to obtain final gaze point coordinates. The coordinates of the at least one historical gaze point may be coordinates of a gaze point obtained through recognition based on historical frame data, and the historical frame data may be a facial image captured before current frame data.

In a possible embodiment, when the gaze point of the user is recognized, the gaze point interaction algorithm module may also directly use a plurality of frames of images that are continuously captured to recognize a plurality of gaze point coordinates, and then perform weighting to obtain the final gaze point coordinates.

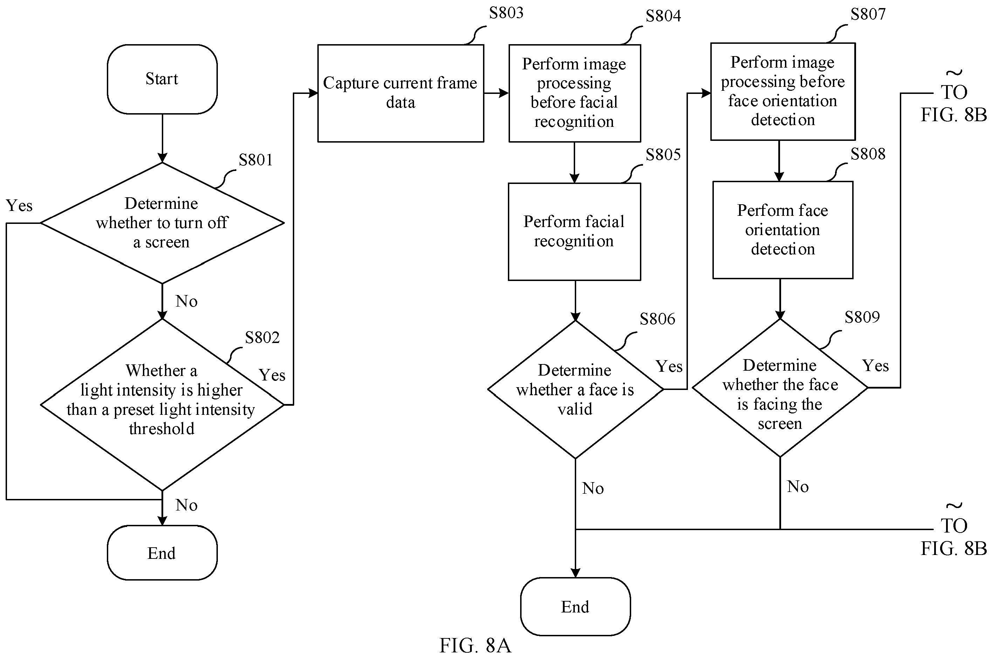

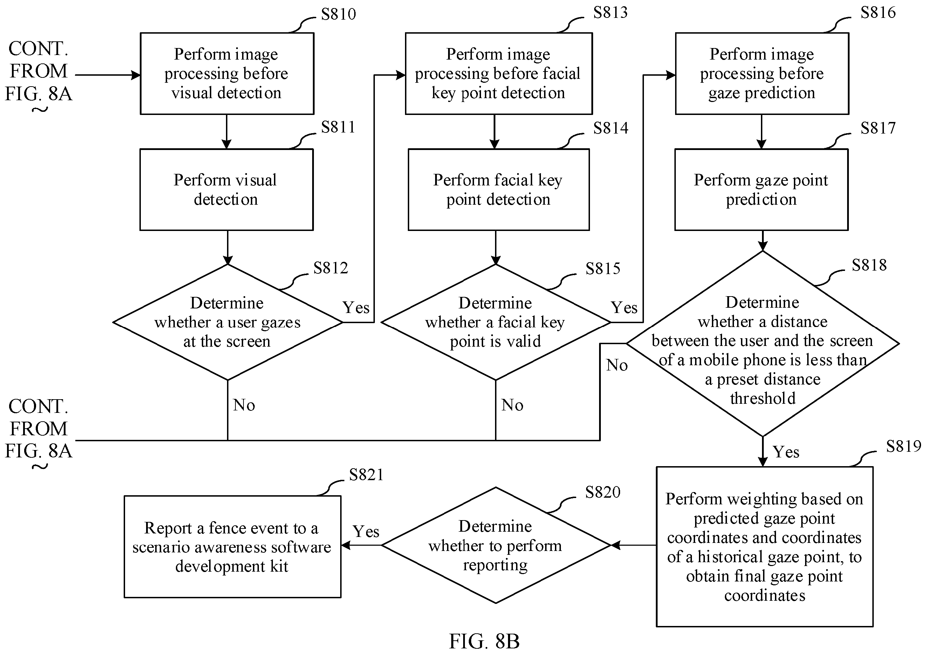

The following further describes in detail a gaze point recognition process and a fence entry/exit determining process in step S602 to step S607 in the embodiment shown in FIG. 6A to FIG. 6C. FIG. 8A and FIG. 8B are a processing flowchart of triggering a fence event according to a specific embodiment of this application. The processing procedure may include steps S801 to S821.

As shown in FIG. 8A and FIG. 8B, in step S801, whether a screen of a mobile phone is turned off may be first determined. In step S802, if it is determined that the screen is not turned off, whether a current light intensity is higher than a preset light intensity threshold may be determined. If the screen is turned off, the entire procedure ends. In step S803, if it is determined that the current light intensity is greater than the preset light threshold, an image sensor captures current frame data and inputs the current frame data to a gaze point interaction engine. If it is determined that the current light intensity is not greater than the preset light threshold, the entire procedure ends. The preset light intensity threshold may be preset based on an actual situation, for example, may be set to 5 lux. This is not specifically limited in this embodiment of this application. Step S801 and step S802 correspond to step S602 and step S603 in the embodiment shown in FIG. 6A to FIG. 6C.

In step S804, the gaze point interaction engine may input the received current frame data into a gaze point interaction algorithm module for image processing before facial recognition. In step S805, the gaze point interaction algorithm module may perform facial recognition on an image obtained through image processing before facial recognition. In step S806, the gaze point interaction algorithm module may determine, based on a facial recognition result obtained through recognition, whether a face is valid. If it is determined that the face is invalid, it may be determined that the current frame data is an invalid frame, and the entire procedure ends. In step S807, it is determined that the face is valid, the gaze point interaction algorithm module may perform image processing before facial orientation detection on the facial recognition result. In step S808, the gaze point interaction algorithm module may perform facial orientation detection on an image obtained through image processing before facial orientation detection. In step S809, the gaze point interaction algorithm module may determine, based on a facial orientation detection result obtained through detection, whether the face is facing the screen. If it is determined that the face is not facing the screen, it may be determined that the current frame data is the invalid frame, and the entire procedure ends.

In step S810, if it is determined that the face is facing the screen, the gaze point interaction algorithm module may perform image processing before visual detection on the facial recognition result. In step S811, the gaze point interaction algorithm module may perform visual detection on an image obtained through image processing before visual detection. In step S812, the gaze point interaction algorithm module may determine, based on a visual detection result obtained through detection, whether the user gazes at the screen. If it is determined that the user does not gaze at the screen, it may be determined that the current frame data is the invalid frame, and the entire procedure ends. In step S813, if it is determined that the user gazes at the screen, the gaze point interaction algorithm module may perform image processing before facial key point detection on the facial recognition result. In step S814, the gaze point interaction algorithm module may perform facial key point detection on an image obtained through image processing before facial key point detection. In step S815, the gaze point interaction algorithm module may determine, based on a facial key point detection result obtained through detection, whether a facial key point is valid. If it is determined that the facial key point is invalid, it may be determined that the current frame data is the invalid frame, and the entire procedure ends. In step S816, if it is determined that the facial key point is valid, the gaze point interaction algorithm module may perform image processing before gaze prediction on the facial recognition result. In step S817, the gaze point interaction algorithm module may perform gaze point prediction on an image obtained through image processing before gaze prediction.

In step S818, the gaze point interaction algorithm module may further determine whether a distance between the user and the screen of the mobile phone is less than a preset distance threshold. If it is determined that the distance is greater than or equal to the preset distance threshold, it may be determined that the current frame data is the invalid frame, and the entire procedure ends. In step S819, if it is determined that the distance is less than the preset distance threshold, the gaze point interaction algorithm module may perform weighting based on coordinates of a historical gaze point obtained through prediction and historical gaze point coordinates corresponding to historical frame data, to obtain final gaze point coordinates. The preset distance threshold may be preset based on an actual requirement, for example, may be set to 50 cm. This is not specifically limited in this embodiment of this application. Step S804 to step S819 correspond to step S604 to step S605' in the embodiment shown in FIG. 6A to FIG. 6C.

It should be noted that, in this embodiment of this application, the distance between the user and the screen of the mobile phone may be 0 to 50 cm, and an optimal distance may be 35 cm, but is not limited thereto.

In step S820, the gaze point interaction algorithm module may further determine a relationship between the final gaze point coordinates and an upper area and a lower area, that is, determine whether a display area in which the gaze point of the user is currently located is the upper area or the lower area. Then, the gaze point interaction algorithm module may determine whether to perform reporting with reference to a display area in which the gaze point of the user is previously located. In step S821, when it is determined that the display area in which the gaze point of the user is currently located is the lower area, and it is determined that the display area in which the gaze point of the user is previously located is the upper area, the gaze point interaction algorithm module may determine to trigger a fence event in which the gaze point of the user is switched from an upper area gaze fence to a lower area gaze fence, that is, needs to report the fence event. In this case, the fence event may be reported to a scenario awareness software development kit (Software Development Kit, SDK) of the gaze point interaction engine. Otherwise, it may be determined that the fence event does not need to be reported, and the entire procedure ends. Step S820 to step S821 correspond to step S606 and step S607 in the embodiment shown in FIG. 6A to FIG. 6C. Then, the scenario awareness software development kit may notify the gaze intention processing module of the reading APP of the fence event.

It should be noted that other content of the steps in the embodiment shown in FIG. 8A and FIG. 8B is not described herein again in this embodiment of this application.

In a possible embodiment, if no face is recognized in step S805 (that is, a quantity of faces is 0), it may be determined that the user leaves. If it is determined in step S809 that the face is not facing the screen, it may be determined that the user is not reading. In this case, page turning may be automatically paused, and the screen may be controlled to turn dark or turn off to save power of the mobile phone. If a plurality of faces are recognized in step S805, one of the faces may be selected as a target face for subsequent operations. The target face may be a face that is closest to a camera, or may be a face with a highest usage rate. A method for selecting the face is not specifically limited in this embodiment of this application.

The following further describes in detail a process of calculating the page reading speed and the page turning waiting time in step S609 in the embodiment shown in FIG. 6A to FIG. 6C.

In a possible embodiment, step S609 may include: determining the page reading speed of the user in the upper area; estimating remaining reading time of the user in the lower area based on the page reading speed; and determining the page turning waiting time based on the remaining reading time.

In a specific embodiment, the gaze intention processing module may calculate, in real time, the page reading speed of the user in the upper area based on page information amount in the upper area and time for the user to read page content in the upper area. In other words, determining the page reading speed of the user in the upper area may include: obtaining accumulated time of reading (an example of first accumulated time) an upper half screen in which the gaze point of the user stays in the upper area; and determining the page reading speed based on the accumulated time of reading the upper half screen and the page information amount in the upper area. The page information amount may include but is not limited to information amounts such as a text amount, a blank, and a proportion of an illustration. This is not specifically limited in this embodiment of this application.

In this embodiment of this application, when the user starts the reading APP to display a corresponding application interface, or after an operation such as page turning or chapter switching is performed, the information amount of a page above a half height position of the application interface may be calculated based on the page content of the current page, and is used as the page information amount in the upper area. Information amount of a page below the half height position of the application interface is calculated, and is used as the page information amount in the lower area. For example, if the current page is a text page, coordinates of each word on the current page may be obtained, and a text amount above the half height position of the application interface is calculated, and is used as the page information amount in the upper area. A text amount below the half height position of the application interface is calculated, and is used as the page information amount in the lower area.

In a possible embodiment, information amount of the page located in the upper area may be calculated based on the page content of the current page, and is used as the page information amount in the upper area, and information amount of a remaining page is used as the page information amount in the lower area.

In this embodiment of this application, to obtain accumulated time of reading the upper half screen and accumulated time of reading the lower half screen, when the user starts the reading APP to display the corresponding application interface, or after the operation such as page turning or chapter switching is performed, the gaze intention processing module may record, based on the display area in which the gaze point of the user is located, current time as the time of reading the upper area or the time of reading the lower area.

Specifically, when the user starts the reading APP to display the corresponding application interface, or after the operation such as page turning or chapter switching is performed, if the display area in which the gaze point of the user is located is the upper area, the gaze intention processing module may record the current time as the time of reading the upper area; or if the display area in which the gaze point of the user is located is the lower area, the gaze intention processing module may record the current time as the time of reading the lower area.

In this embodiment of this application, when the user gazes at a middle area of the display interface, a gaze point jump caused by an inaccurate algorithm recognition result may exist, and/or a case in which the user scans up and down, or reads the page content in the lower part and then reads the page content in the upper part again may occur. Therefore, to obtain the accumulated time of reading the upper half screen and the accumulated time of reading the lower half screen, each time it is determined that the gaze point of the user moves from the upper area to the lower area, time at which it is determined that the gaze point of the user moves from the upper area to the lower area may be recorded as the time of reading the lower area. Each time it is determined that the gaze point of the user moves from the lower area to the upper area, time at which it is determined that the gaze point of the user moves from the lower area to the upper area may also be recorded as the time of reading the upper area. A time difference between time of reading the lower area last time and time of reading the upper area last time may be further accumulated to the accumulated time of reading the upper half screen or the accumulated time of reading the lower half screen.

It can be learned from the foregoing analysis that, in a process in which the user reads a new page, the gaze intention processing module may obtain an event sequence indicating a change status of the display area in which a gaze point of the user is located. Based on the event sequence, the accumulated time of reading the upper half screen in which the gaze point of the user stays in the upper area and the accumulated time of reading of the lower half screen in which the gaze point of the user stays in the lower area may be accumulated and calculated based on a time difference between the reading time of the upper area and the reading time of the lower area that are recorded correspondingly.

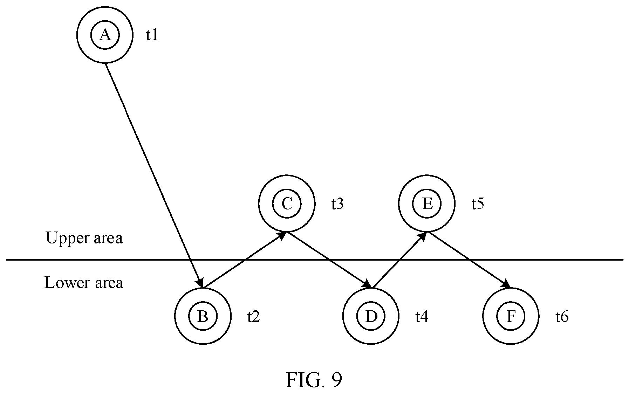

For example, with reference to FIG. 9 in the specification, FIG. 9 is a diagram of a change status of a display area in which a gaze point of a user is located according to an embodiment of this application. As shown in FIG. 9, A→B→C→D→E→F is the change status of the display area in which the gaze point of the user is located, and time of each change may be recorded as t1, t2, t3, t4, t5, and t6. In this case, it may be determined that a sum *T*1 = (*t*2 - *t*1) + (*t*4 - *t*3) + (*t*6 - *t*5) of time from the point A to the point B, from the point C to the point D, and from the point E to the point F is the accumulated time of reading the upper half screen in which the gaze point of the user stays in the upper area, and a sum *T*2 = (*t*3 - *t*2) + (*t*5 - *t*4) of time from the point B to the point C and form the point D to the point E is the accumulated time of reading of the lower half screen in which the gaze point of the user stays in the lower area.

In this embodiment of this application, the page reading speed of the user may be estimated based on the accumulated time of reading the upper half screen and the page information amount in the upper area. A specific calculation formula is as follows: $V 1 = \frac{X 1}{T 1} = \frac{X 1}{\left(t2-t1\right) + \left(t4-t3\right) + \left(t6-t5\right)}$

V1 represents the page reading speed, X1 represents the page information amount in the upper area, and T1 represents the accumulated time of reading the upper half screen.

In a specific embodiment, estimating the remaining reading time of the user in the lower area based on the page reading speed may include: when the page reading speed is within a preset speed range, determining an estimated reading time of the user in the lower area based on the page information amount in the lower area and the page reading speed; when the page reading speed is beyond the preset speed range, determining the estimated reading time of the user in the lower area based on the page information amount in the lower area and the preset reading speed or the historical reading speed of the user; and determining the remaining reading time based on the estimated reading time and the accumulated time of reading (an example of the second accumulated time) of the lower half screen in which the gaze point of the user stays in the lower area.

The preset speed range may be preset based on an actual situation, for example, may be determined based on an average reading speed range of a user group, or may be determined based on a historical reading speed of a user. This is not specifically limited in this embodiment of this application. For example, the preset speed range may be set to a speed range greater than or equal to 5 words/second and less than or equal to 15 words/second.

The preset reading speed may be preset based on an actual situation, for example, may be set to a default reading speed of 10 words/second. This is not specifically limited in this embodiment of this application. The historical reading speed may also be determined based on an actual situation, for example, may be an average reading speed at which the user reads all page content of a previous page of the current page, or may be a page reading speed that is in the upper area and that is obtained by estimating when the user reads the previous page of the current page. This is not specifically limited in this embodiment of this application.

In this embodiment of this application, after the page reading speed is determined, it may be further determined whether the page reading speed meets a normal range, or whether a large error exists is determined with reference to the historical reading speed of the user. The page reading speed that does not meet the normal range or has a large error may be discarded, and the preset reading speed or the historical reading speed of the user is used to estimate the estimated reading time of the user in the lower area, to estimate the remaining reading time of the user in the lower area. A specific estimation method for the estimated reading time and the remaining reading time is described in detail subsequently.

In a specific embodiment, determining the page turning waiting time based on the remaining reading time may include: when the remaining reading time is within a preset time range, determining the page turning waiting time as the remaining reading time; when the remaining reading time is less than a minimum value of the preset time range, determining the page turning waiting time as 2s (an example of first preset time); and when the remaining reading time is greater than a maximum value of the preset time range, determining the page turning waiting time as 9s (an example of second preset time).

The preset time range may be preset based on an actual situation, for example, may be set to a time range greater than or equal to 3s and less than or equal to 9s. This is not specifically limited in this embodiment of this application.

In this embodiment of this application, to avoid excessively fast page turning or excessively long page turning, the gaze intention processing module may further check the estimated remaining reading time, to determine whether the estimated remaining reading time meets a proper duration interval. The gaze intention processing module may discard the remaining reading time that does not meet the proper duration interval, and use the preset page turning waiting time.

It should be noted that, the example in which 2s is used as the first preset time and 9s is used as the second preset time is merely an example implementation. In actual application, the first preset time and the second preset time may also be set to other values. This is not specifically limited in this embodiment of this application.

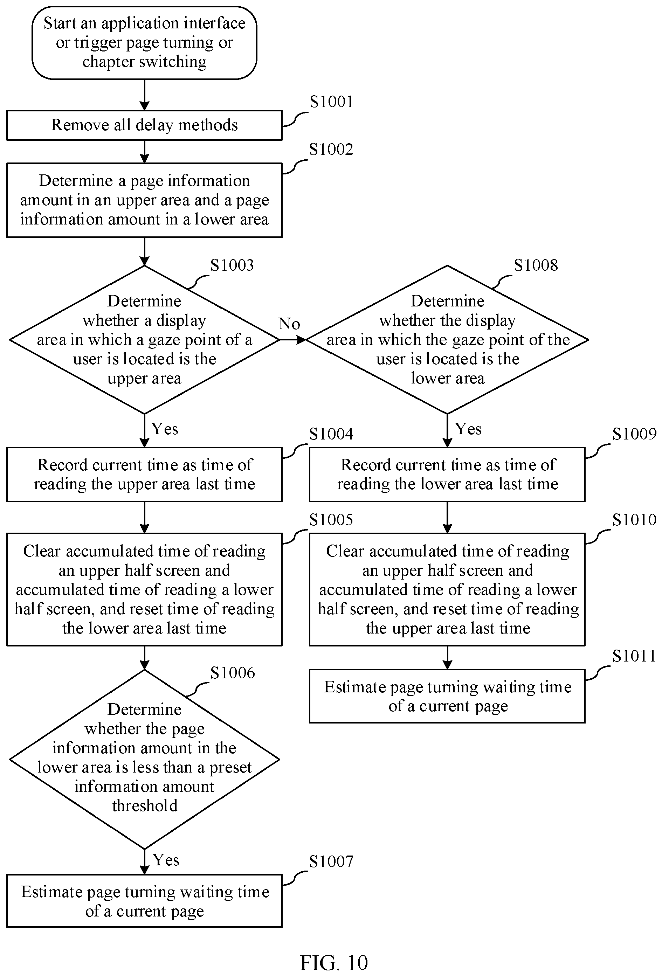

The following describes in detail a processing process when the mobile phone opens a new page. FIG. 10 is a processing flowchart of opening a new page according to an embodiment of this application. The processing procedure may include steps S1001 to S1011.

As shown in FIG. 10, in step S1001, when a user starts the reading APP to display a corresponding application interface, or after an operation such as page turning or chapter switching is triggered, a gaze intention processing module may first remove all delay methods, that is, reset all delay time. In step S1002, the gaze intention processing module may determine a page information amount in an upper area and a page information amount in a lower area. In step S1003, the gaze intention processing module may further determine a display area in which a gaze point of the user is located, and determine whether the display area in which the gaze point of the user is located is an upper area. In step S1004, if it is determined that the display area in which the gaze point of the user is located is the upper area, current time may be recorded as time of reading the upper area last time. In addition, in step S1005, the gaze intention processing module may clear accumulated time of reading an upper half screen and accumulated time of reading a lower half screen, and reset time of reading the lower area last time.

In step S1006, the gaze intention processing module may further determine whether a page information amount in a lower area is less than a preset information amount threshold. The preset information amount threshold may be preset based on an actual requirement, for example, may be set to 30 words. This is not specifically limited in this embodiment of this application. In step S1007, if it is determined that the page information amount in the lower area is less than the preset information amount threshold, page turning waiting time of the current page may be directly estimated, and subsequent steps are performed. For example, the page turning waiting time may be directly calculated based on the page information amount of the entire page and the preset reading speed or a historical reading speed of the user. Specifically, if it is determined that the page information amount in the lower area is greater than or equal to the preset information amount threshold, no operation may be performed.

In step S1008, if it is determined that the display area in which the gaze point of the user is located is not the upper area, it may be determined whether the display area in which the gaze point of the user is located is the lower area. In step S1009, if it is determined that the display area in which the gaze point of the user is located is the lower area, the current time may be recorded as time of reading the lower area last time. In addition, in step S1010, the gaze intention processing module may clear accumulated time of reading the upper half screen and accumulated time of reading the lower half screen, and reset the time of reading the upper area last time. In step S1011, the gaze intention processing module may further directly estimate page turning waiting time of the current page, and perform subsequent steps. The estimation method is similar to that in step S1007. Details are not described herein again in this embodiment of this application. Specifically, if it is determined that the display area in which the gaze point of the user is located is not the lower area, it may be determined that the user gazes at an area outside the application interface, and in this case, no operation may be performed.

It should be noted that other content of the steps in the embodiment shown in FIG. 10 is not described herein again in this embodiment of this application.

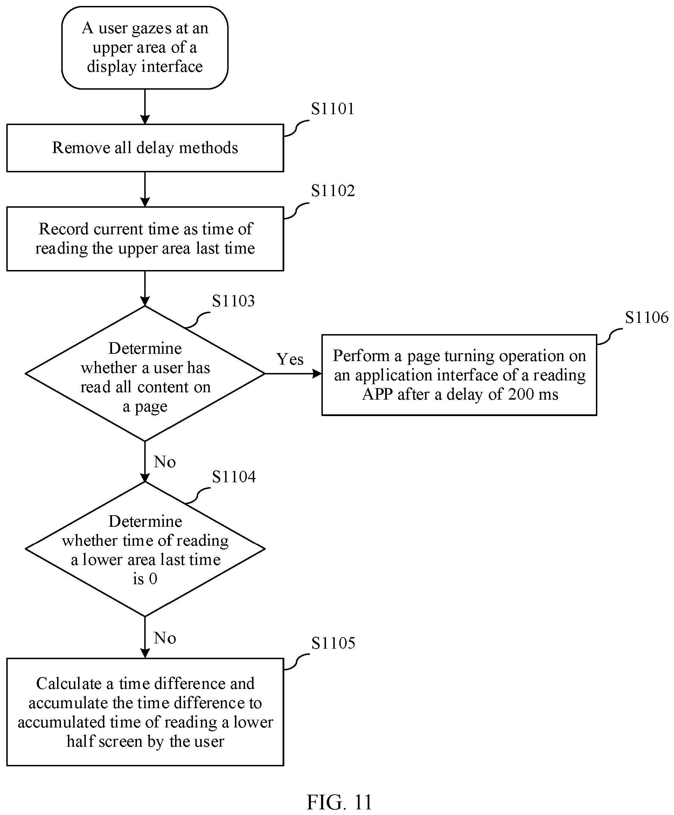

The following describes in detail a processing process when the user switches from gazing at the lower area to gazing at the upper area. FIG. 11 is a processing flowchart of switching from gazing at a lower area to gazing at an upper area according to an embodiment of this application. The processing procedure may include steps S1101 to S1106.

As shown in FIG. 11, in step S1101, when the user switches from gazing at the lower area to gazing at the upper area, all delay methods may be first removed, that is, all delay time may be reset. In step S1102, a gaze intention processing module may record current time as time of reading an upper area last time. In step S1103, the gaze intention processing module may further determine whether the user has read all content on a page. For example, when the user is not prompted to look up to turn a page, it is determined whether page turning waiting time obtained through previous calculation has passed after it is determined that the gaze point of the user is moved from the upper area to a lower area last time. Alternatively, when the user is prompted to look up to turn the page, it may be directly determined whether the user has been prompted to look up to turn the page. In step S1104, if it is determined that the user does not read all content on the page, it may be determined whether time of reading the lower area last time is 0. In step S1105, if it is determined that the time of reading the lower area last time is not 0, a time difference between the time of reading the lower area last time and the time of reading the upper area last time may be calculated, and the time difference is accumulated to the accumulated time of reading the lower half screen by the user. If it is determined that the time of reading the lower area last time is 0, no operation may be performed. In step S1106, if it is determined that the user reads all content on the page, a page turning instruction may be sent to a reader module after a delay of 200 ms, to perform the page turning operation on the application interface of a reading APP.

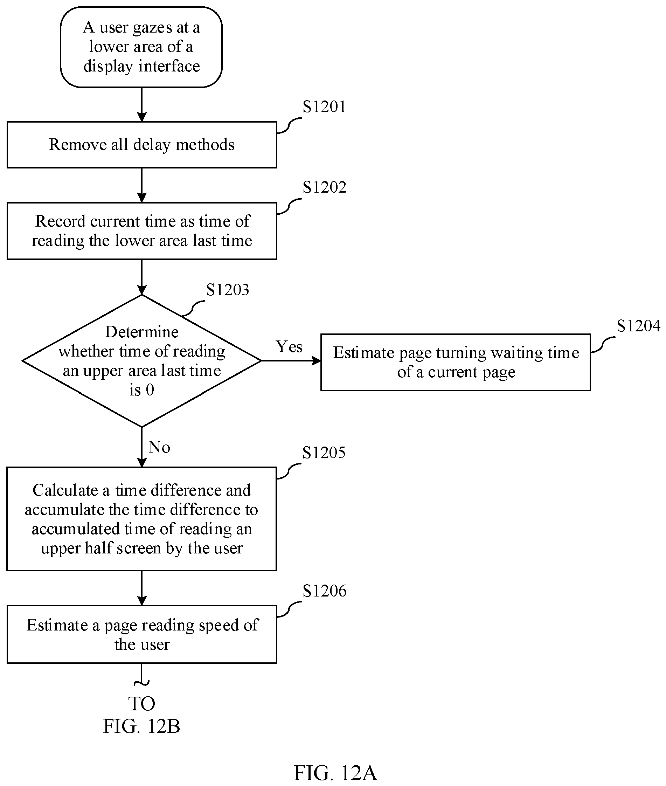

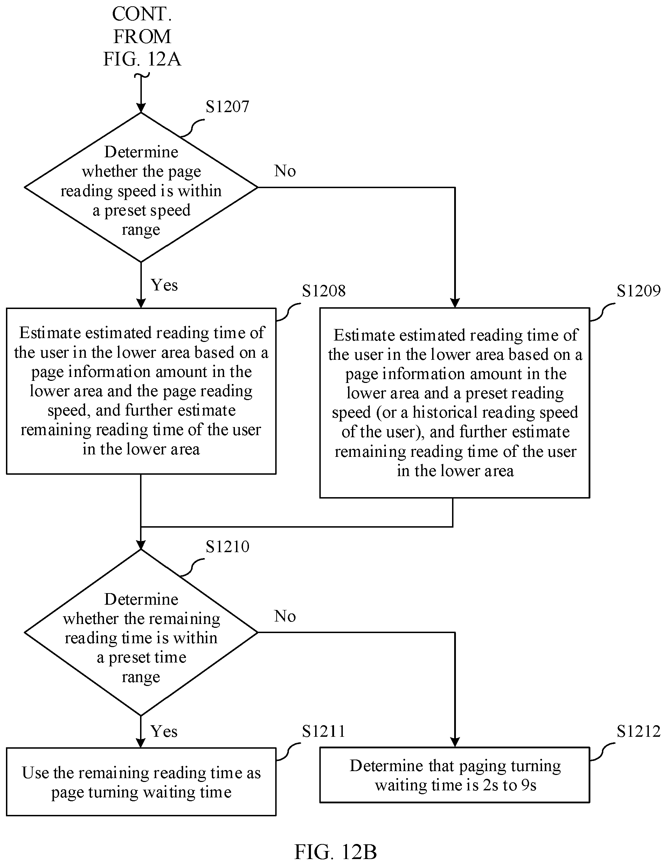

The following describes in detail a processing process when the user switches from gazing at the upper area to gazing at the lower area. FIG. 12A and FIG. 12B are a processing flowchart of switching from gazing at an upper area to gazing at a lower area according to an embodiment of this application. The processing procedure may include steps S1201 to S1212.

As shown in FIG. 12A and FIG. 12B, in step S1201, when the user switches from gazing at the upper area to gazing at the lower area of the display interface, a gaze intention processing module may first remove all delay methods, that is, reset all delay time. In step S1202, the gaze intention processing module may record current time as time of reading the lower area last time. In step S1203, the gaze intention processing module may further determine whether the time of reading the upper area last time is 0. In step S1204, if it is determined that the time of reading the upper area last time is 0, it may be determined that the user directly looks at the lower area. In this case, page turning waiting time of a current page may be directly estimated, and subsequent steps are performed. An estimation method is similar to the estimation method in step S1007 in the embodiment shown in FIG. 10. Details are not described herein again in this embodiment of this application.

In step S1205, if it is determined that the time of reading the upper area last time is not 0, a time difference between time of reading the lower area last time and the time of reading the upper area last time may be calculated, and the time difference is accumulated to accumulated time of reading an upper half screen by the user. In step S 1206, the gaze intention processing module may further estimate a page reading speed of the user based on the accumulated time of reading the upper half screen and a page information amount in the upper area.

In step S1207, the gaze intention processing module may determine whether the page reading speed is within a preset speed range. If the page reading speed is within the preset speed range, it may be determined that the page reading speed meets a normal range or no large error exists. If the page reading speed is not within the preset speed range, it may be determined that the page reading speed does not meet the normal range or a large error exists.

In step S 1208, when it is determined that the page reading speed is within the preset speed range (that is, it is determined that the page reading speed meets the normal range or no large error exists), the gaze intention processing module may estimate the estimated reading time of the user in the lower area based on the page information amount and the page reading speed in the lower area, and further estimate remaining reading time of the user in the lower area. A specific calculation formula is as follows: $T ′ = \frac{X 2}{V 1} - T 2 = \frac{X 2}{X 1} \times T 1 - T 2 = \frac{X 2}{X 1} \times \left[\left(t2-t1\right)+\left(t4-t3\right)+\left(t6-t5\right)\right] - \left[\left(t3-t2\right)+\left(t5-t4\right)\right]$

*T'* represents the remaining reading time, X2 represents the page information amount in the lower area, and T2 represents the accumulated time of reading of the lower half screen.

Optionally, in step S1209, when it is determined that the page reading speed is outside the preset speed range (that is, it is determined that the page reading speed does not meet the normal range or the large error exists), the gaze intention processing module may discard the calculated page reading speed, estimate the estimated reading time of the user in the lower area based on the page information amount in the lower area and the preset reading speed, and further estimate the remaining reading time of the user in the lower area. A specific calculation formula is as follows: $T ′ = \frac{X 2}{V 2} - T 2 = \frac{X 2}{V 2} - \left[\left(t3-t2\right)+\left(t5-t4\right)\right]$

V2 represents the preset reading speed.

Optionally, in step S1209, when it is determined that the page reading speed is outside the preset speed range (that is, it is determined that the page reading speed does not meet the normal range or the large error exists), the gaze intention processing module may further discard the calculated page reading speed, estimate the estimated reading time of the user in the lower area based on the page information amount in the lower area and the historical reading speed of the user, and further estimate the remaining reading time of the user in the lower area. A specific calculation formula is as follows: $T ′ = \frac{X 2}{V 3} - T 2 = \frac{X 2}{V 3} - \left[\left(t3-t2\right)+\left(t5-t4\right)\right]$

V3 represents the historical reading speed of the user.

In step S1210, the gaze intention processing module may further calculate whether the obtained remaining reading time is within a preset time range. In step S1211, when it is determined that the remaining reading time is within the preset time range, the gaze intention processing module may determine that the remaining reading time meets a proper duration interval. In this case, the remaining reading time may be directly used as the page turning waiting time of the application interface of the reading APP. In step S1212, when it is determined that the remaining reading time is outside the preset time range, the gaze intention processing module may determine that the remaining reading time does not meet the proper duration interval. In this case, if the remaining reading time is less than a minimum value of the preset time range, it may be determined that the page turning waiting time of the application interface of the reading APP is 2s. If the remaining reading time is greater than a maximum value of the preset time range, it may be determined that the page turning waiting time of the application interface of the reading APP is 9s. In other words, if the remaining reading time is less than the minimum value of the preset time range, the subsequent step needs to be performed at least after 2s. If the remaining reading time is greater than the maximum value of the preset time range, the subsequent step is performed no later than 9s.

The following uses a scenario in which the user is prompted to look up to turn the page as an example to describe in detail the page turning method provided in this embodiment of this application. In this scenario, when it is determined that the user has read all the content on the page, the mobile phone may prompt the user to look up to turn the page, so that the user obtains a psychological implication that an explicit intention has been accurately recognized.

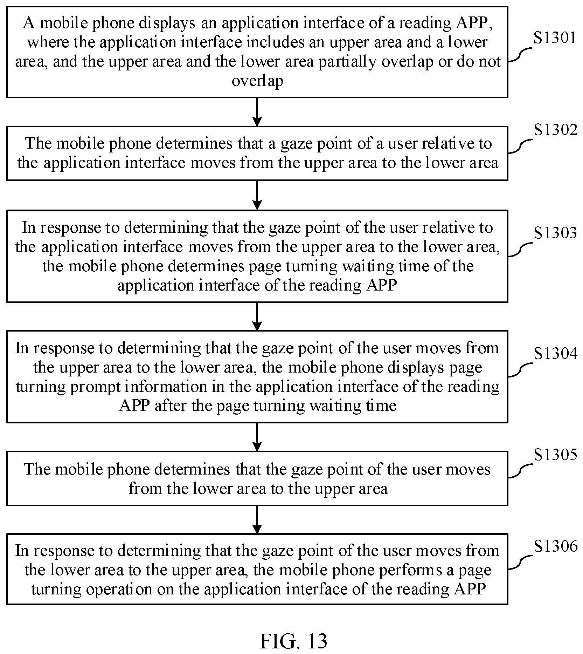

FIG. 13 is a flowchart of a page turning method according to another embodiment of this application. The method may include steps S1301 to S1306.

S1301: A mobile phone displays an application interface of a reading APP (an example of a first application), where the application interface includes an upper area (an example of a first display area) and a lower area (an example of a second display area), and the upper area and the lower area partially overlap or do not overlap.

S1302: The mobile phone determines that the gaze point of the user relative to the application interface moves from the upper area to the lower area.

S1303: In response to determining that the gaze point of the user relative to the application interface moves from the upper area to the lower area, the mobile phone determines page turning waiting time of the application interface of the reading APP.

In this embodiment of this application, to avoid triggering incorrect page turning because a user is prompted to turn a page too fast, or the user is not prompted to turn a page for long time, causing long waiting time of the user, estimated remaining reading time may be checked, to determine whether the estimated remaining reading time meets a proper time interval, and the page turning waiting time is determined based on a determining result. For a specific determining method, refer to related content in the embodiment shown in FIG. 4. Details are not described herein again in this embodiment of this application.

S1304: In response to determining that the gaze point of the user moves from the upper area to the lower area, the mobile phone displays page turning prompt information in the application interface of the reading APP after the page turning waiting time has elapsed.

In this embodiment of this application, in response to determining that the gaze point of the user moves from the upper area to the lower area, and after current waiting time t reaches page turning waiting time T (that is, determining that the user has read all content on the page), the mobile phone may further perform page turning prompt, to guide the user to look up to turn a page. Specifically, the page turning prompt information may be displayed on the application interface of the reading APP, and the page turning prompt information may be used to prompt the user to move the gaze point from the lower area to the upper area, to perform automatic page turning.

It should be noted that content and a display position of the page turning prompt information may be preset based on an actual situation. For example, the page turning prompt information may be set to "look up, turn a page", and a display position of the page turning prompt information may be set to a bottom of a page. This is not specifically limited in this embodiment of this application.

S1305: The mobile phone determines that the gaze point of the user moves from the lower area to the upper area.

In this embodiment of this application, the mobile phone may determine a page turning intention while displaying the page turning prompt information. For a specific determining method, refer to related content in the embodiment shown in FIG. 4. Details are not described herein again in this embodiment of this application.

S1306: In response to determining that the gaze point of the user moves from the lower area to the upper area, the mobile phone performs a page turning operation on the application interface of the reading APP.

In this embodiment of this application, because there is the following recognition result jump scenario: The user gazes at the lower area of the application interface, the user is prompted to look up to turn a page, and the user does not look up, but an error occurs in algorithm recognition, resulting in a jump of the gaze point of the user from down to up and then down. In this scenario, page turning is triggered by mistake, affecting user experience. Therefore, to avoid such a jump scenario, a page turning delay of 200 ms may be added. For a specific page turning delay method, refer to related content in the embodiment shown in FIG. 4. Details are not described herein again in this embodiment of this application.

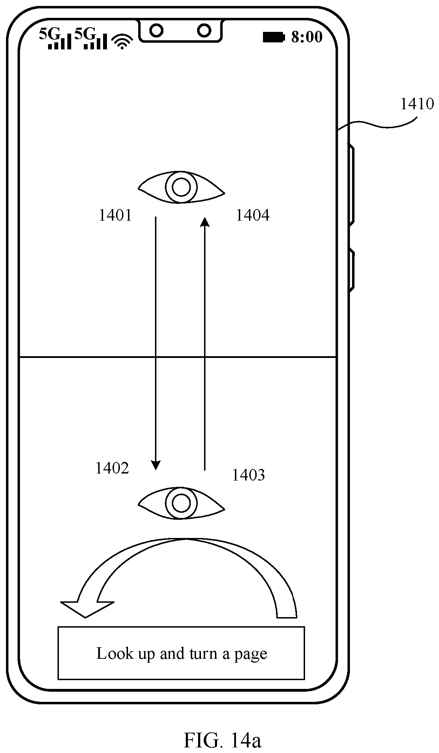

For example, with reference to FIG. 14a in the specification, FIG. 14a is a diagram of a left and right page turning process according to an embodiment of this application. As shown in FIG. 14a, when a user moves a gaze point from a position 1401 in an upper area to a position 1402 in a lower area, the mobile phone may determine that the gaze point of the user moves from the upper area to the lower area. In response to determining that the gaze point of the user moves from the upper area to the lower area, and after page turning waiting time, the mobile phone may display page turning prompt information "look up to turn a page" in an application interface 1410 of a reading APP. Then, when the user moves the gaze point from a position 1403 in the lower area to a position 1404 in the upper area, the mobile phone may determine that the gaze point of the user moves from the lower area to the upper area. In response to determining that the gaze point of the user moves from the lower area to the upper area, the mobile phone may perform an action of turning one page left or right on the application interface of the reading APP after a delay of 200 ms.

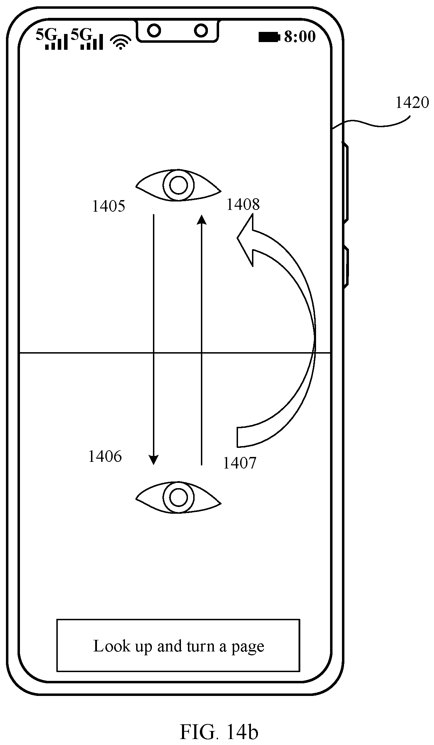

For example, with reference to FIG. 14b in the specification, FIG. 14b is a diagram of a page turning process of an upper half screen and a lower half screen according to an embodiment of this application. As shown in FIG. 14b, when the user moves the gaze point from a position 1405 in the upper area to a position 1406 in the lower area, the mobile phone may determine that the gaze point of the user moves from the upper area to the lower area. In response to determining that the gaze point of the user moves from the upper area to the lower area, and after page turning waiting time, the mobile phone may display page turning prompt information "look up to turn a page" in an application interface 1420 of the reading APP. Then, when the user moves the gaze point from a position 1407 in the lower area to a position 1408 in the upper area, the mobile phone may determine that the gaze point of the user moves from the lower area to the upper area. In response to determining that the gaze point of the user moves from the lower area to the upper area, the mobile phone may perform a page turning action of half-screen flip overlay on the application interface of the reading-type APP after a delay of 200 ms.

It should be noted that, for other content in step S1301 to step S1306 in this embodiment of this application, refer to related content in the embodiments shown in FIG. 4 to FIG. 12A and FIG. 12B. Details are not described herein again in this embodiment of this application.

In a possible embodiment, when the user performs a rotation operation on the mobile phone to switch the mobile phone from a portrait mode to a landscape mode, the mobile phone may obtain a corresponding rotation direction, and the rotation direction may include left rotation and right rotation. When the mobile phone is rotated to the left, a camera of the mobile phone (that is, an image sensor) is rotated to the left, and when the mobile phone is rotated to the right, the camera of the mobile phone is rotated to the right. The mobile phone may further obtain a current interface following mode, and the interface following mode may include two modes: a following mode and a non-following mode. In the following mode, a layout of the application interface may change with rotation of the mobile phone (that is, from an upper/lower layout to a left/right layout). In the non-following mode, the layout of the application interface may not change with rotation of the mobile phone. The mobile phone may switch the display interface based on the rotation direction and the current interface following mode, and adjust division of two display areas in the display interface.

The following provides detailed descriptions by using an example in which the rotation direction of the mobile phone is left rotation and the interface following mode is the non-following mode.

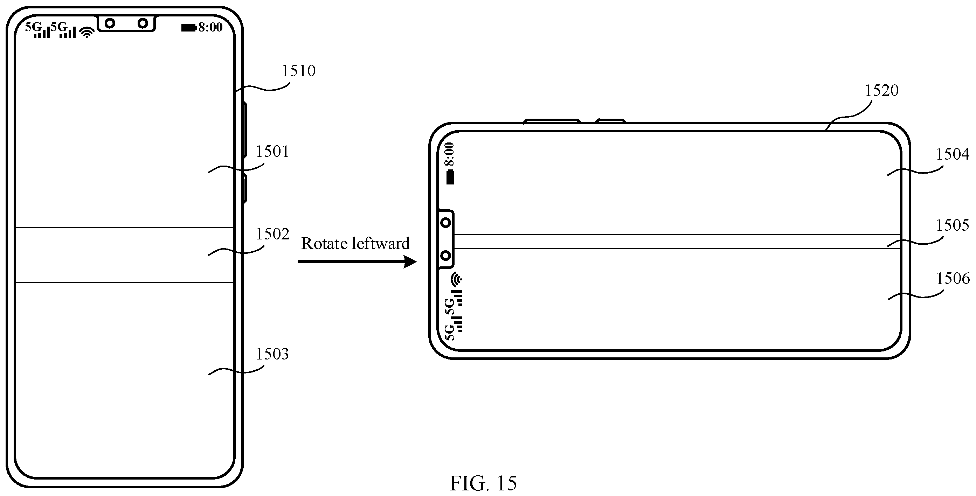

For example, with reference to FIG. 15 in the specification, FIG. 15 is a diagram of switching a mobile phone from a portrait mode to a landscape mode according to an embodiment of this application. When the user rotates the mobile phone to the left, it is assumed that a current interface following mode is a non-following mode, a position relationship between the two display areas of the user interface does not change with rotation of the mobile phone, and is still an upper and lower relationship. In other words, after the mobile phone is switched from the portrait mode to the landscape mode, a reading page still keeps upward. As shown in FIG. 15, in the portrait display mode of the mobile phone, a portrait application interface 1510 of a reading APP may include an upper area and a lower area. The upper area of the portrait application interface 1510 may include an upper grid 1501 and a transition area 1502. The lower area of the portrait application interface 1510 may include the transition area 1502 and a lower grid 1503. When the user rotates the mobile phone to the left, the mobile phone enters the landscape display mode. In this case, the application interface of the reading APP is switched to a landscape application interface 1520. The landscape application interface 1520 may still include an upper area and a lower area. The upper area of the landscape application interface 1520 may include an upper grid 1504 and a transition area 1505. The lower area of the landscape application interface 1520 may include the transition area 1505 and a lower grid 1506.

In this embodiment of this application, when the interface following mode is the non-following mode, although a layout of the application interface does not change after the mobile phone is switched from the portrait mode to the landscape mode, a position and an angle of a camera (that is, an image sensor) of the mobile phone relative to an eye of the user change in different display modes (including the portrait display mode and the landscape display mode). Therefore, in different display modes, the mobile phone may use different gaze point interaction algorithms to recognize a gaze point of the user and determine a display area in which the gaze point is located. For example, in the portrait display mode of the mobile phone, a gaze point interaction algorithm in an upper and lower area recognition mode may be used to recognize the gaze point of the user and determine the display area in which the gaze point is located. In a landscape display mode of the mobile phone, a gaze point interaction algorithm in a left and right area recognition mode may be used to recognize the gaze point of the user and determine the display area in which the gaze point is located. Different gaze point interaction algorithms in different modes may correspond to different camera position parameters, angle parameters, and the like.

Specifically, in the left and right area recognition mode, the mobile phone may determine, by using the gaze point interaction algorithm, whether a position of a gaze point of the user is a left side area or a right side area of the physical screen, and may separately map the left side area and the right side area of the physical screen to the upper area and the lower area of the display interface based on the rotation direction of the mobile phone, to determine whether the display area of the application interface in which the gaze point of the user is located is the upper area or the lower area. Specifically, when the rotation direction is left rotation, the left side area of the physical screen may be automatically mapped to the lower area of the display interface, and the right side area of the physical screen may be mapped to the upper area of the display interface. When the rotation direction is right rotation, the left side area of the physical screen may be automatically mapped to the upper area of the display interface, and the right side area of the physical screen may be mapped to the lower area of the display interface.

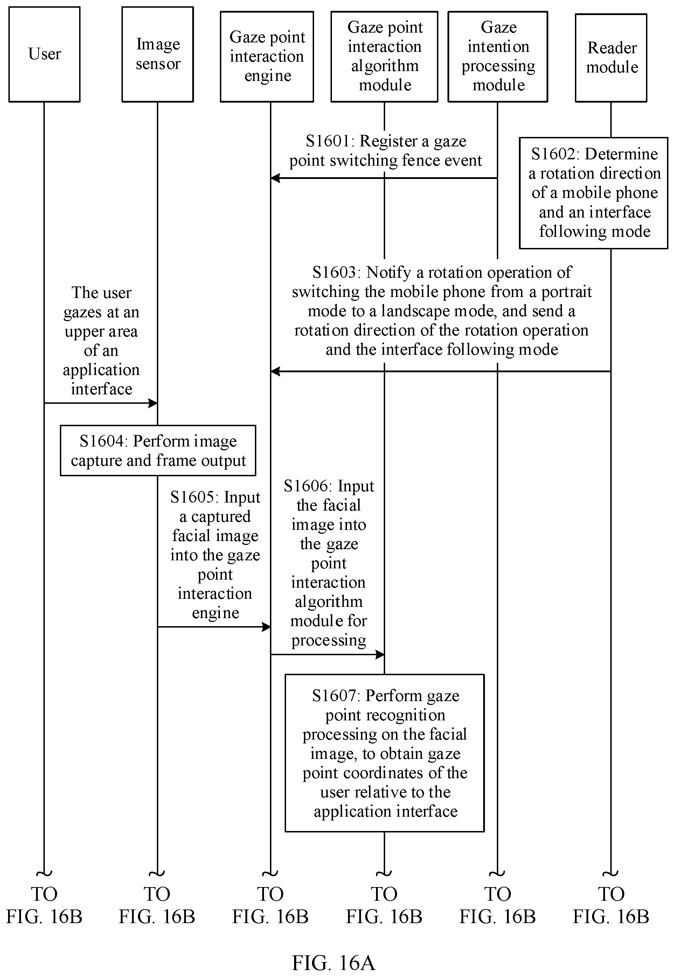

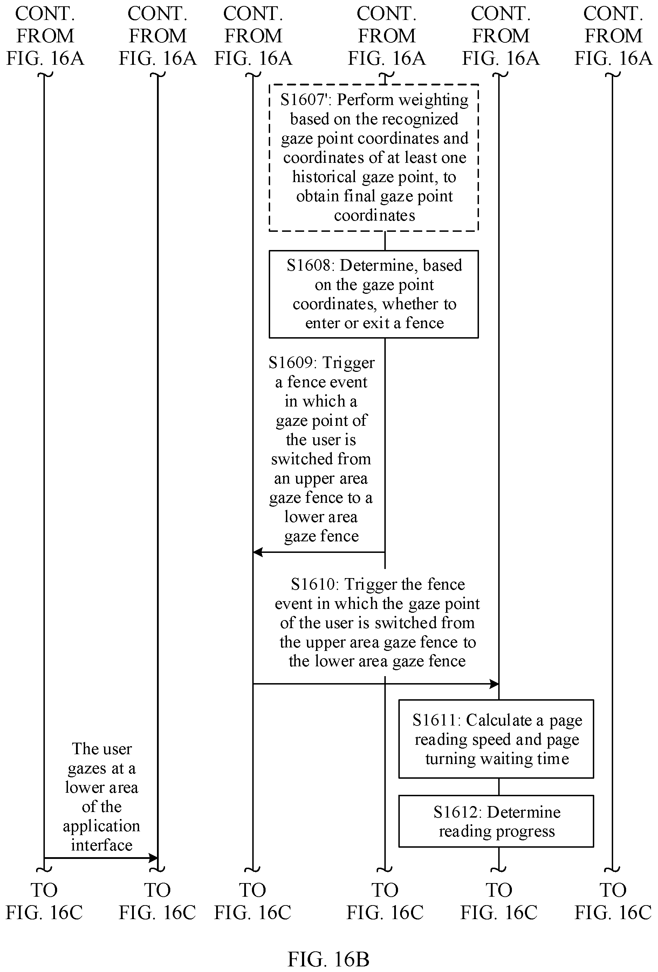

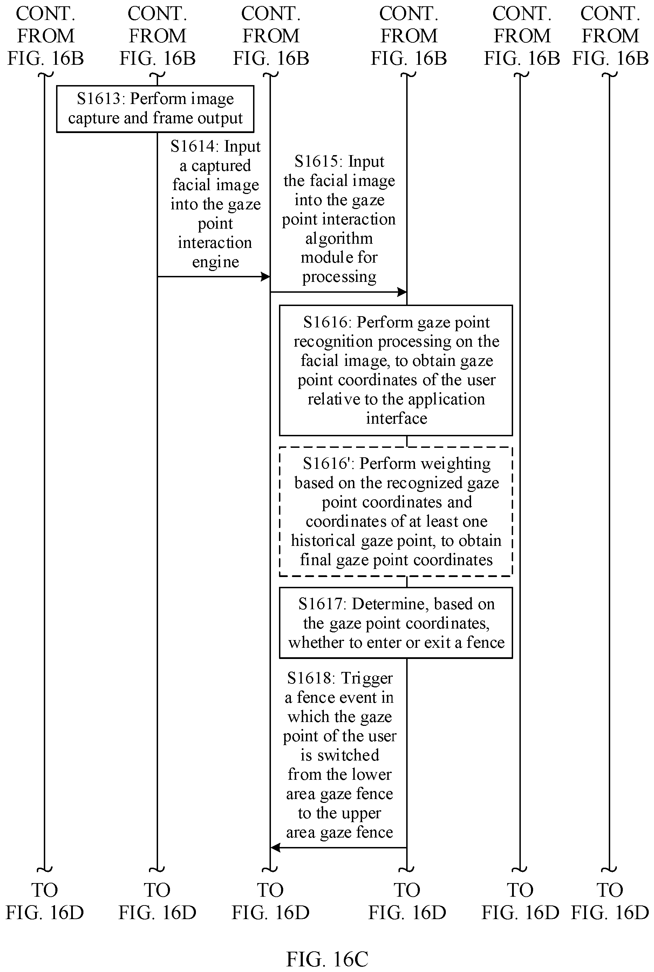

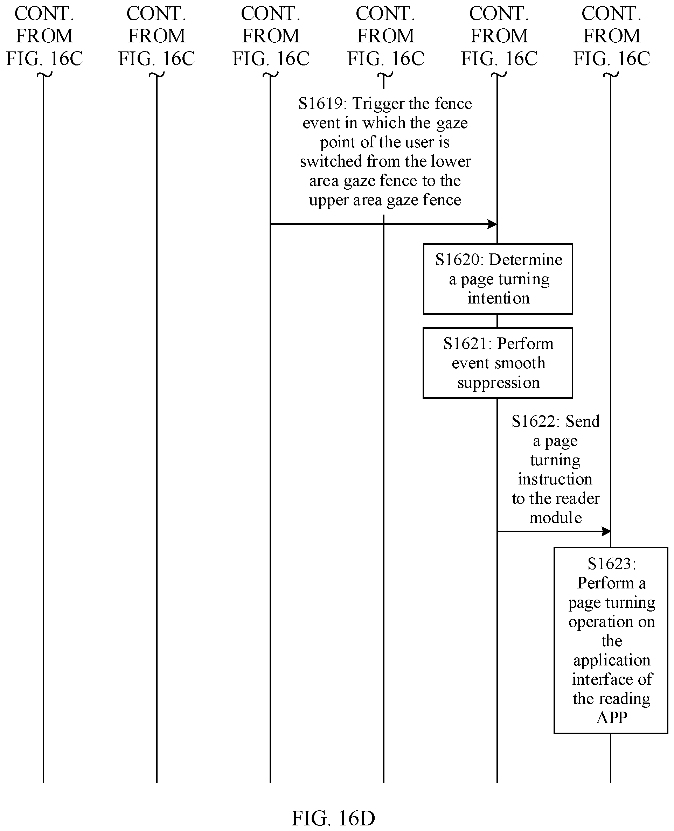

In a specific embodiment, with reference to FIG. 16A to FIG. 16D in the specification, FIG. 16A to FIG. 16D are a flowchart of a page turning method according to another specific embodiment of this application. The flowchart is a further description of an embodiment of a scenario in which a mobile phone is switched from a portrait mode to a landscape mode. Content in step S1601 and step S1604 to step S1623 in the embodiment shown in FIG. 16A to FIG. 16D is similar to content in step S601 to step S621 in the embodiment shown in FIG. 6A to FIG. 6C. Same content is not described herein again in this embodiment of this application, and only different content is described in detail.

As shown in FIG. 16A to FIG. 16D, in step S1602, when the user performs a rotation operation on the mobile phone to switch the mobile phone from the portrait mode to the landscape mode, a reader module may determine a rotation direction and an interface following mode of the mobile phone in response to the rotation operation. In addition, an application interface of a reading APP displayed on the mobile phone is switched based on the interface following mode. In step S1603, the reader module may notify a gaze point interaction engine of the rotation operation of switching the mobile phone from the portrait mode to the landscape mode, and send the rotation direction of the rotation operation and the interface following mode.

In step S1606, after receiving a facial image of the user, the gaze point interaction engine may input the facial image of the user into a gaze point interaction algorithm module for processing. Specifically, the gaze point interaction engine may determine a related parameter (for example, a parameter such as a position and an angle of the image sensor relative to the eye of the user) based on the rotation direction, and input the facial image, the related parameter, and the interface following mode into the gaze point interaction algorithm module. In step S1607, the gaze point interaction algorithm module may perform gaze point recognition processing on the facial image to obtain gaze point coordinates of the user relative to the application interface. In step S1608, the gaze point interaction algorithm module may further determine, based on the gaze point coordinates, whether to enter or exit a fence, to determine whether to trigger a fence event in which the gaze point of the user is switched from an upper area gaze fence to a lower area gaze fence. Specifically, when determining that the interface following mode is a non-following mode, the gaze point interaction algorithm module may use a gaze point interaction algorithm in a left and right area recognition mode to recognize the gaze point of the user and determine an area of a physical screen in which the gaze point is located. The gaze point interaction algorithm module may further determine the rotation direction of the rotation operation, and separately map a left side area and a right side area of the physical screen to the upper area and the lower area of the display interface based on the rotation direction, to determine the display area of the application interface in which the gaze point is located, and further determine whether to trigger the fence event in which the gaze point of the user is switched from the upper area gaze fence to the lower area gaze fence.

In step S1615, after receiving the facial image of the user, the gaze point interaction engine may input the facial image of the user into the gaze point interaction algorithm module for processing. A specific implementation process is similar to that of step S1606, and details are not described herein again in this embodiment of this application. In step S1616, the gaze point interaction algorithm module may perform gaze point recognition processing on the facial image, to obtain gaze point coordinates of the user relative to the application interface. In step S1617, the gaze point interaction algorithm module may further determine, based on the gaze point coordinates, whether to enter or exit the fence, to determine whether to trigger a fence event in which the gaze point of the user is switched from the lower area gaze fence to the upper area gaze fence (that is, determine that the gaze point of the user moves from the lower area to the upper area). A specific determining method is similar to that in step S1607 and step S1608, and details are not described herein again in this embodiment of this application.

It should be noted that, for other content in step S1601 to step S1623 in the embodiment shown in FIG. 16A to FIG. 16D, refer to related content in the embodiment shown in FIG. 6A to FIG. 6C. Details are not described herein again in this embodiment of this application.

The following uses a mobile phone as an example to describe in detail a page turning method according to another embodiment of this application. The mobile phone may be in a portrait display mode, and a plurality of APPs are installed in the mobile phone, where some or all of the APPs are APPs that provide information for the user. In an initial state, the user may be allowed to select whether to habitually gaze at an upper part or a lower part of the application interface. A corresponding page turning method is determined according to a result of the user selection.

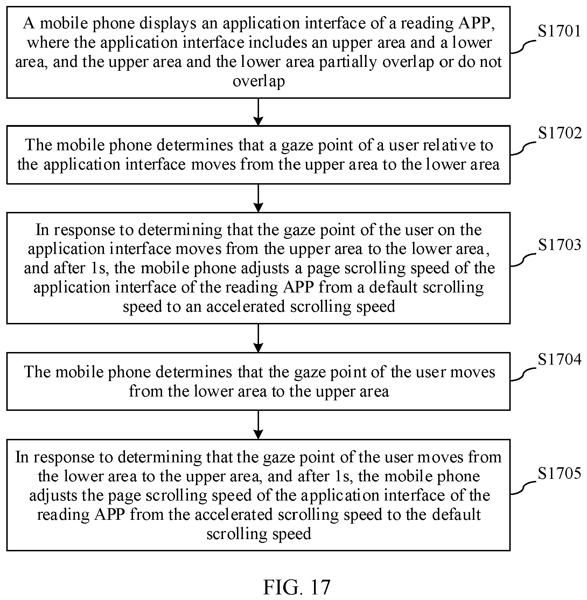

The following describes in detail the page turning method provided in this embodiment of this application when the user selects to habitually gaze at an upper part of the application interface. FIG. 17 is a flowchart of a page turning method according to still another embodiment of this application. The method may include steps S1701 to S1705.

S1701: A mobile phone displays an application interface of a reading APP (an example of a second application), where the application interface includes an upper area (an example of a first display area) and a lower area (an example of a second display area), and the upper area and the lower area partially overlap or do not overlap.

In this embodiment of this application, the second application may be any application that is installed in the mobile phone and that can provide information for the user, and second applications may be various types of applications, including but not limited to a reading APP, a browser APP, an information feed APP, and the like. In this embodiment of this application, the reading APP is used as an example of the first application. However, this application is not limited thereto. The reading APP may be an APP in a scrolling page turning mode or a swiping page turning mode.

S1702: The mobile phone determines that the gaze point of the user relative to the application interface moves from the upper area to the lower area.

S1703: In response to determining that the gaze point of the user relative to the application interface moves from the upper area to the lower area, and after 1s (an example of fourth preset time) has elapsed, the mobile phone adjusts the page scrolling speed of the application interface of the reading APP from a default scrolling speed (an example of a first scrolling speed) to an accelerated scrolling speed (an example of a second scrolling speed).

In this embodiment of this application, because the reading APP is an APP in the scrolling page turning mode or the swiping page turning mode, and the user selects to habitually gaze at the upper part of the application interface, when the mobile phone determines that the gaze point of the user moves from the upper area to the lower area, it may be determined that the page scrolling speed is slower than the reading speed of the user, and the scrolling speed needs to be increased. In response to determining that the gaze point of the user relative to the application interface moves from the upper area to the lower area, and after 1s has elapsed, the mobile phone adjusts the page scrolling speed of the application interface of the reading APP from the default scrolling speed to the accelerated scrolling speed, so that a page of the application interface scrolls at an accelerated speed.

Both the default scrolling speed and the accelerated scrolling speed may be preset based on an actual situation. For example, the default scrolling speed may be set by the user, and the accelerated scrolling speed may be calculated based on the default scrolling speed set by the user. For different users, a corresponding default scrolling speed and a corresponding accelerated scrolling speed may be the same or may be different. This is not specifically limited in this embodiment of this application.

It should be noted that the foregoing example in which 1s is used as the fourth preset time is merely an example implementation. In actual application, the fourth preset time may alternatively be set to another value. This is not specifically limited in this embodiment of this application.

In a possible embodiment, the page turning method may further include: The mobile phone determines an adjustment coefficient corresponding to the user, and determining the accelerated scrolling speed based on the adjustment coefficient. The adjustment coefficient corresponding to the user may be greater than 1 (that is, an acceleration coefficient). The adjustment coefficient corresponding to the user may be preset based on an actual situation, for example, may be set to 1.5. For different users, a same adjustment coefficient may be set, or different adjustment coefficients may be set. This is not specifically limited in this embodiment of this application.

Specifically, the default scrolling speed may be multiplied by the adjustment coefficient corresponding to the user to obtain the accelerated scrolling speed. Because the adjustment coefficient is greater than 1, the accelerated scrolling speed obtained through calculation is greater than the default scrolling speed.

S1704: The mobile phone determines that the gaze point of the user moves from the lower area to the upper area.

S1705: In response to determining that the gaze point of the user moves from the lower area to the upper area and after 1s (an example of fifth preset time), the mobile phone adjusts the page scrolling speed of the application interface of the reading APP from the accelerated scrolling speed to the default scrolling speed.

In this embodiment of this application, when determining that the gaze point of the user moves from the lower area to the upper area, the mobile phone may determine that the page scrolling speed is faster than the reading speed of the user, and the scrolling speed needs to be reduced. In response to determining that the gaze point of the user moves from the lower area to the upper area, the mobile phone may adjust the page scrolling speed of the application interface of the reading APP from the accelerated scrolling speed to the default scrolling speed after 1s, so that the page of the application interface is restored to the default speed.

It should be noted that the foregoing example in which 1s is used as the fifth preset time is merely an example implementation. In actual application, the fifth preset time may alternatively be set to another value. This is not specifically limited in this embodiment of this application.

It should be noted that, for other content in step S1701 to step S1705 in this embodiment of this application, refer to related content in the embodiments shown in FIG. 4 to FIG. 12A and FIG. 12B. Details are not described herein again in this embodiment of this application.

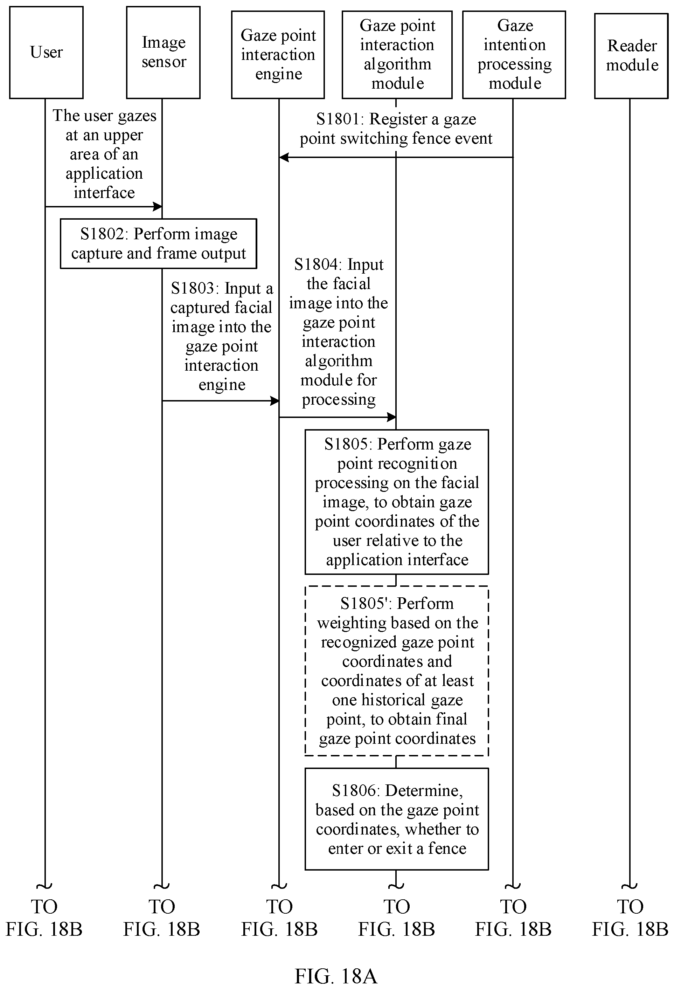

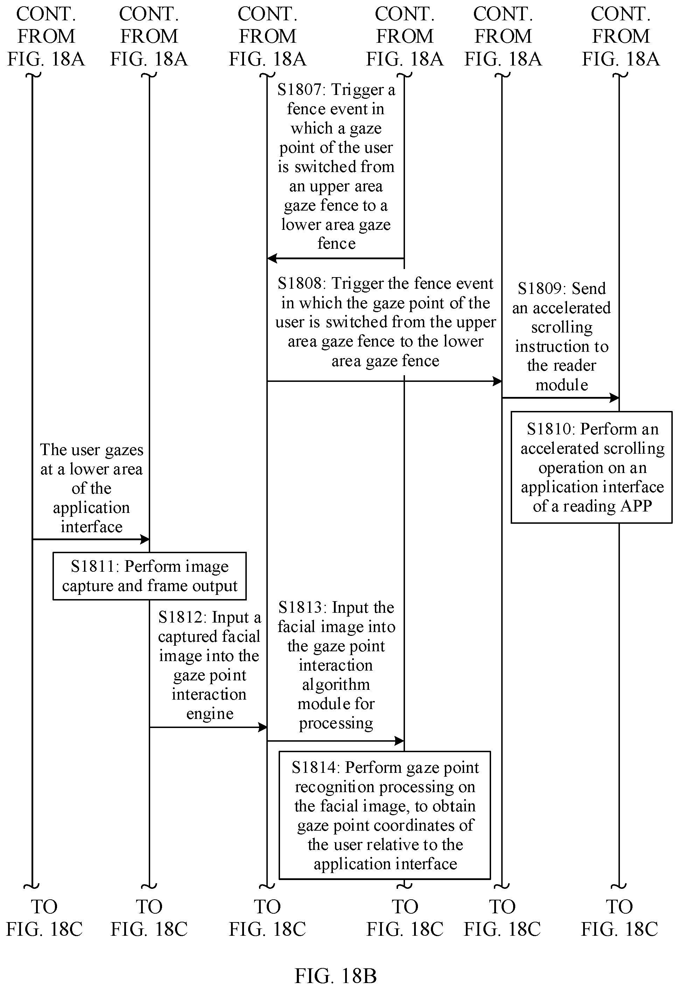

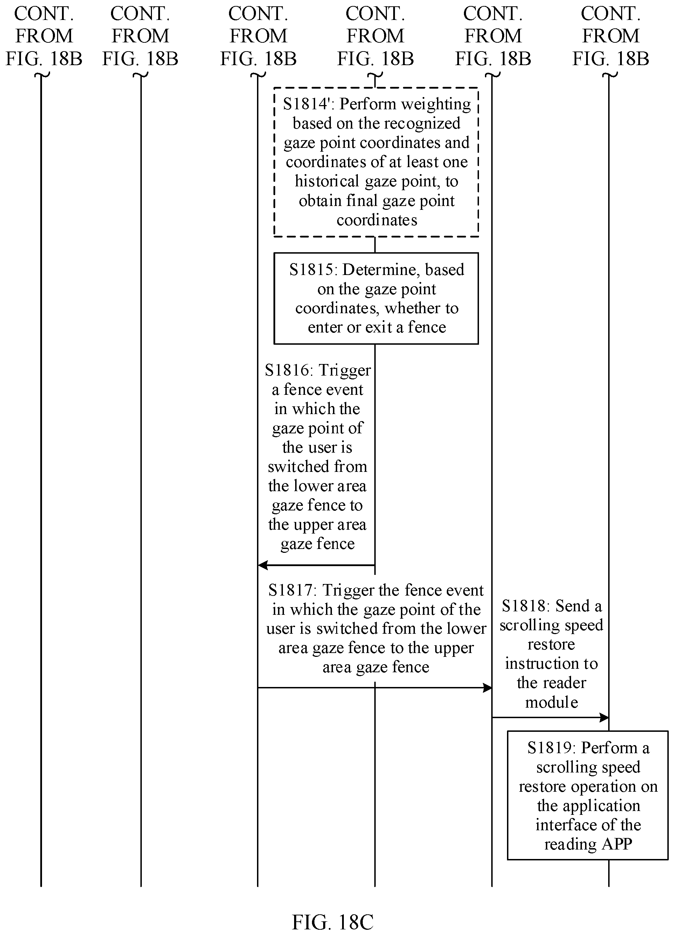

In a specific embodiment, with reference to FIG. 18A to FIG. 18C in the specification, FIG. 18A to FIG. 18C are a flowchart of a page turning method according to still another specific embodiment of this application. The method is a further description of the embodiment shown in FIG. 17. Content in step S1801 to step S1808 and step S1811 to step S1817 in the embodiment shown in FIG. 18A to FIG. 18C is similar to content in step S601 to step S608 and step S611 to step S617 in the embodiment shown in FIG. 6A to FIG. 6C. Details are not described herein again in this embodiment of this application, and only content different from that in the embodiment shown in FIG. 6A to FIG. 6C is described in detail.

As shown in FIG. 18A to FIG. 18C, in step S1809, in response to the fence event in which the gaze point of the user is switched from the upper area gaze fence to the lower area gaze fence, and after 1s has elapsed, the gaze intention processing module may send an accelerated scrolling instruction to the reader module. In step S1810, the reader module may perform, in response to the accelerated scrolling instruction, an accelerated scrolling operation on the application interface of the reading APP.

It should be noted that step S1809 to step S1810 correspond to step S1703 in the embodiment shown in FIG. 17.

As shown in FIG. 18A to FIG. 18C, in step S1818, in response to the fence event in which the gaze point of the user is switched from the lower area gaze fence to the upper area gaze fence, and after 1s has elapsed, the gaze intention processing module may send a scrolling speed restore instruction to the reader module. In step S1819, the reader module may perform, in response to the scrolling speed restore instruction, a scrolling speed restore operation on the application interface of the reading APP.

It should be noted that step S1818 to step S1819 correspond to step S1705 in the embodiment shown in FIG. 17.

It should be noted that, for other content in step S1801 to step S1819 in the embodiment shown in FIG. 18A to FIG. 18C, refer to related content in the embodiment shown in FIG. 6A to FIG. 6C. Details are not described herein again in this embodiment of this application.

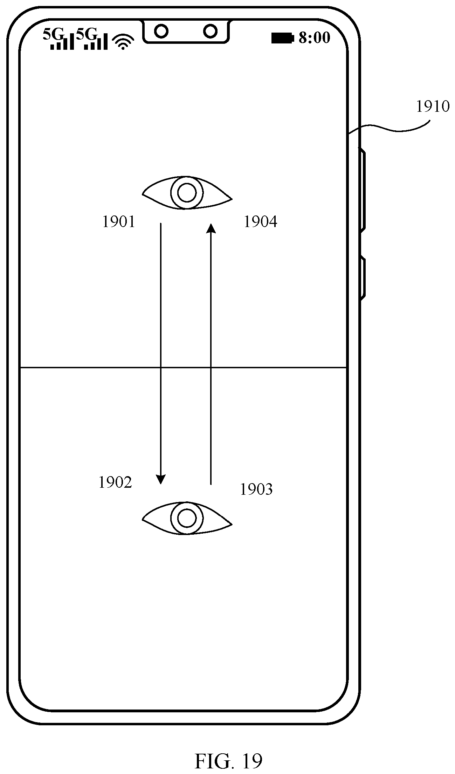

For example, with reference to FIG. 19 in the specification, FIG. 19 is a diagram of accelerated scrolling page turning according to an embodiment of this application. As shown in FIG. 19, when a user moves a gaze point from a position 1901 in an upper area to a position 1902 in a lower area, a mobile phone may determine that the gaze point of the user moves from the upper area to the lower area. In response to determining that the gaze point of the user moves from the upper area to the lower area, and after 1s has elapsed, the mobile phone adjusts a page scrolling speed of an application interface 1910 from the default scrolling speed to an accelerated scrolling speed, so that a page of the application interface 1910 scrolls at an accelerated speed.

As shown in FIG. 19, when the user moves the gaze point from a position 1903 in the lower area to a position 1904 in the upper area, the mobile phone may determine that the gaze point of the user moves from the lower area to the upper area. In response to determining that the gaze point of the user moves from the lower area to the upper area, and after 1s has elapsed, the mobile phone adjusts the page scrolling speed of the application interface 1910 from the accelerated scrolling speed to a default scrolling speed, so that the page scrolling speed of the application interface 1910 is restored.

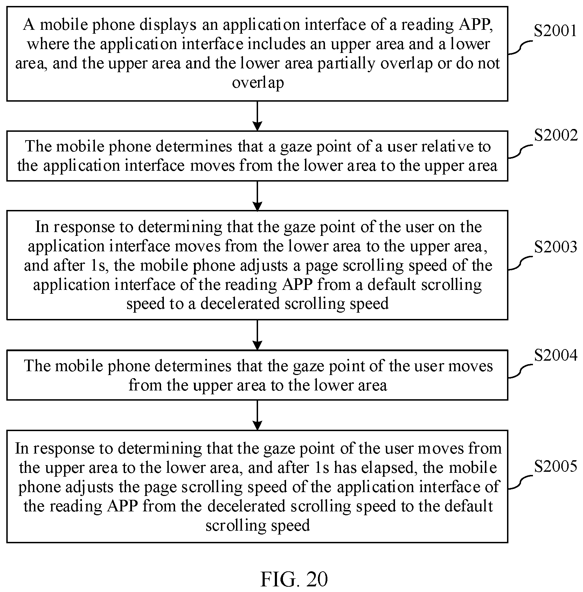

The following describes in detail the page turning method provided in this embodiment of this application when the user selects to habitually gaze at a lower part of the application interface. FIG. 20 is a flowchart of a page turning method according to yet another embodiment of this application. The method may include steps S2001 to S2005.

S2001: A mobile phone displays an application interface of a reading APP (an example of a second application), where the application interface includes an upper area (an example of a first display area) and a lower area (an example of a second display area), and the upper area and the lower area partially overlap or do not overlap.

S2002: The mobile phone determines that a gaze point of a user relative to the application interface moves from the lower area to the upper area.

S2003: In response to determining that the gaze point of the user relative to the application interface moves from the lower area to the upper area, and after 1s (an example of fourth preset time), the mobile phone adjusts the page scrolling speed of the application interface of the reading APP from a default scrolling speed (an example of a first scrolling speed) to a decelerated scrolling speed (an example of a second scrolling speed).

In this embodiment of this application, because the reading APP is an APP in a scrolling page turning mode or a swiping page turning mode, and the user selects to habitually gaze at the lower part of the application interface, when the mobile phone determines that the gaze point of the user moves from the lower area to the upper area, it may be determined that the page scrolling speed is faster than the reading speed of the user, and the scrolling speed needs to be reduced. In response to determining that the gaze point of the user relative to the application interface moves from the lower area to the upper area, and after 1s has elapsed, the mobile phone adjusts the page scrolling speed of the application interface of the reading APP from the default scrolling speed to the decelerated scrolling speed, so that a page of the application interface scrolls at a decelerated speed.

Both the default scrolling speed and the decelerated scrolling speed may be preset based on an actual situation. For example, the default scrolling speed may be set by the user, and the decelerated scrolling speed may be calculated based on the default scrolling speed set by the user. For different users, a corresponding default scrolling speed and a corresponding decelerated scrolling speed may be the same or may be different. This is not specifically limited in this embodiment of this application.

It should be noted that the foregoing example in which 1s is used as the fourth preset time is merely an example implementation. In actual application, the fourth preset time may alternatively be set to another value. This is not specifically limited in this embodiment of this application.

In a possible embodiment, the page turning method may further include: The mobile phone determines an adjustment coefficient corresponding to the user, and determining the decelerated scrolling speed based on the adjustment coefficient. The adjustment coefficient corresponding to the user may be less than 1 (that is, a deceleration coefficient). The adjustment coefficient corresponding to the user may be preset based on an actual situation, for example, may be set to 0.5. For different users, a same adjustment coefficient may be set, or different adjustment coefficients may be set. This is not specifically limited in this embodiment of this application.

Specifically, the default scrolling speed may be multiplied by the adjustment coefficient corresponding to the user to obtain the decelerated scrolling speed. Because the adjustment coefficient is less than 1, the decelerated scrolling speed obtained through calculation is less than the default scrolling speed.

S2004: The mobile phone determines that the gaze point of the user moves from the upper area to the lower area.

S2005: In response to determining that the gaze point of the user moves from the upper area to the lower area and after 1s (an example of fifth preset time) has elapsed, the mobile phone adjusts the page scrolling speed of the application interface of the reading APP from the decelerated scrolling speed to the default scrolling speed.

In this embodiment of this application, when determining that the gaze point of the user moves from the upper area to the lower area, the mobile phone may determine that the page scrolling speed is slower than the reading speed of the user, and the scrolling speed needs to be increased. In response to determining that the gaze point of the user moves from the upper area to the lower area, and after 1s has elapsed, the mobile phone adjusts the page scrolling speed of the application interface of the reading APP from the decelerated scrolling speed to the default scrolling speed, so that the page of the application interface is restored to the default speed.

It should be noted that the foregoing example in which 1s is used as the fifth preset time is merely an example implementation. In actual application, the fifth preset time may alternatively be set to another value. This is not specifically limited in this embodiment of this application.

It should be noted that for other content of step S2001 to step S2005 in this embodiment of this application, refer to related content in the embodiments shown in FIG. 4 to FIG. 12B and FIG. 17 to FIG. 19. Details are not described herein again in this embodiment of this application.

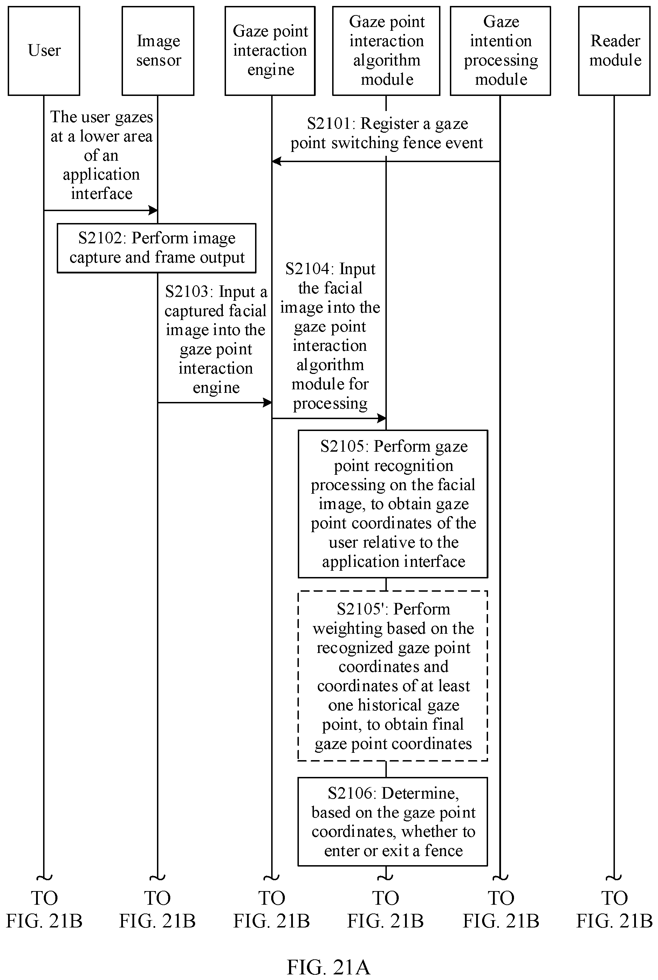

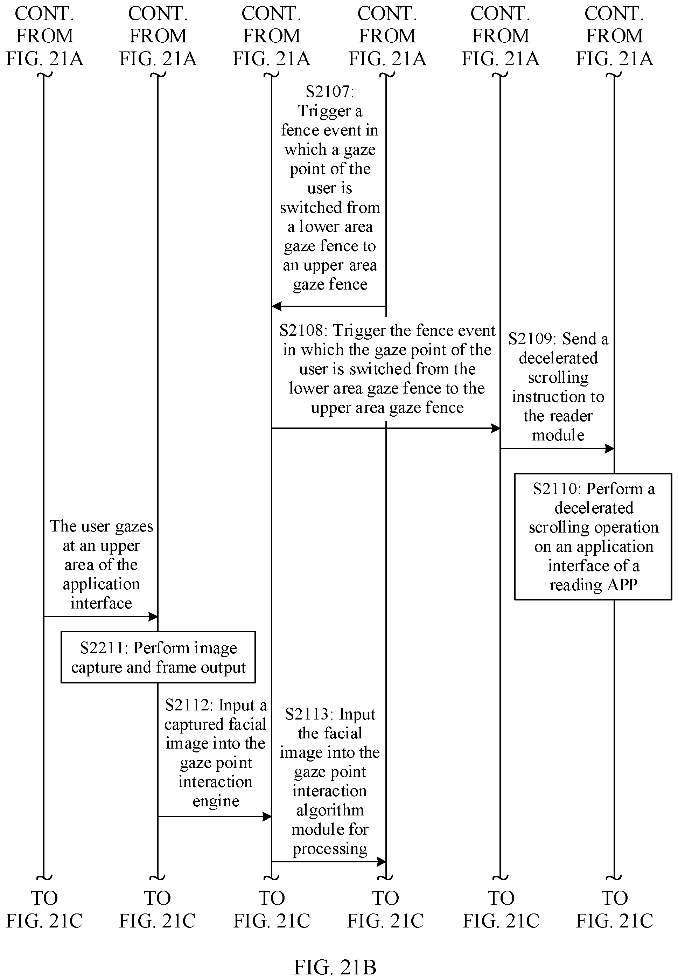

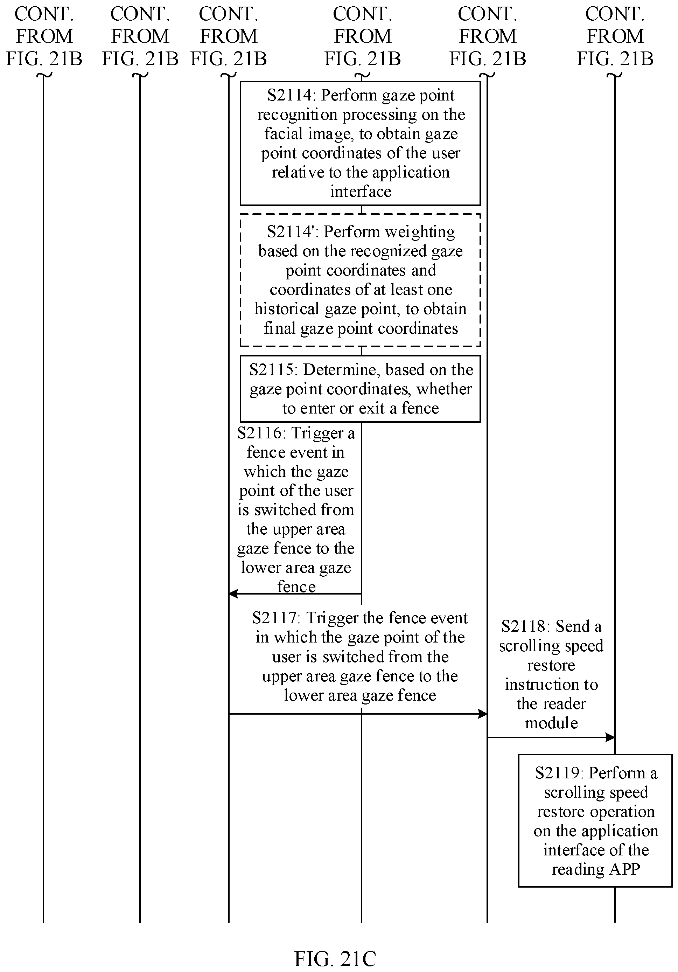

In a specific embodiment, with reference to FIG. 21A to FIG. 21C in the specification, FIG. 21A to FIG. 21C are a flowchart of a page turning method according to yet another specific embodiment of this application. The method is a further description of the embodiment shown in FIG. 20. Content of step S2101 to step S2108 and step S2111 to step S2117 in the embodiment shown in FIG. 21A to FIG. 21C is similar to content of step S601 to step S608 and step S611 to step S617 in the embodiment shown in FIG. 6A to FIG. 6C. Details are not described herein again in this embodiment of this application, and only content different from that in the embodiment shown in FIG. 6A to FIG. 6C is described in detail.

As shown in FIG. 21A to FIG. 21C, in step S2109, in response to the fence event in which the gaze point of the user is switched from the lower area gaze fence to the upper area gaze fence, and after 1s has elapsed, the gaze intention processing module may send a deceleration scrolling instruction to the reader module In step S2110, the reader module may perform, in response to the deceleration scrolling instruction, a deceleration scrolling operation on the application interface of the reading APP.

It should be noted that step S2109 to step S2110 correspond to step S2003 in the embodiment shown in FIG. 20.

As shown in FIG. 21A to FIG. 21C, in step S2118, in response to the fence event in which the gaze point of the user is switched from the upper area gaze fence to the lower area gaze fence, and after 1s has elapsed, the gaze intention processing module may send a scrolling speed restore instruction to the reader module. In step S2119, the reader module may perform, in response to the scrolling speed restore instruction, a scrolling speed restore operation on the application interface of the reading APP.

It should be noted that step S2118 to step S2119 correspond to step S2005 in the embodiment shown in FIG. 20.

It should be noted that for other content in step S2101 to step S2119 in the embodiment shown in FIG. 21A to FIG. 21C, refer to related content in the embodiment shown in FIG. 6A to FIG. 6C. Details are not described herein again in this embodiment of this application.

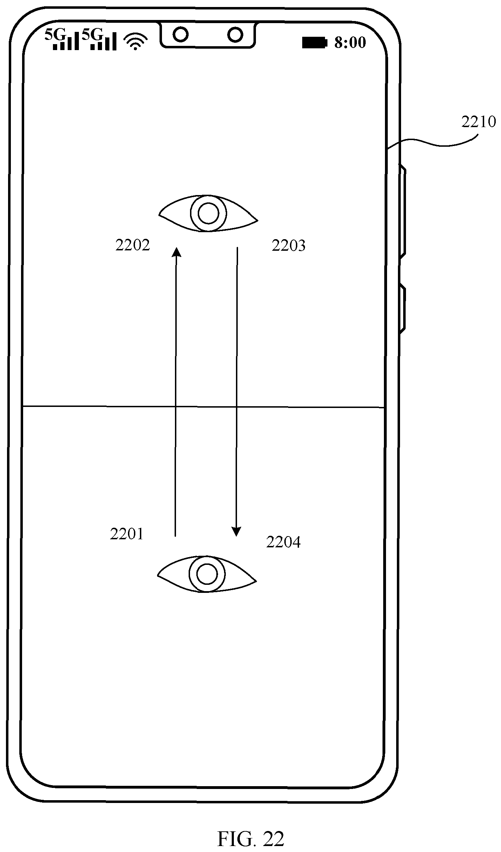

For example, with reference to FIG. 22 in the specification, FIG. 22 is a diagram of decelerated scrolling page turning according to an embodiment of this application. As shown in FIG. 22, when the user moves the gaze point from a position 2201 in the lower area to a position 2202 in the upper area, the mobile phone may determine that the gaze point of the user moves from the lower area to the upper area. In response to determining that the gaze point of the user is moved from the lower area to the upper area, and after 1s has elapsed, the mobile phone adjusts a page scrolling speed of the application interface 2210 from a default scrolling speed to a decelerated scrolling speed, so that a page of the application interface 2210 scrolls at a decelerated speed.

As shown in FIG. 22, when a user moves a gaze point from a position 2203 in an upper area to a position 2204 in a lower area, a mobile phone may determine that the gaze point of the user moves from the upper area to the lower area. In response to determining that the gaze point of the user moves from the upper area to the lower area, and after 1s has elapsed, the mobile phone adjusts the page scrolling speed of the application interface 2210 from the decelerated scrolling speed to the default scrolling speed, so that the page scrolling speed of the application interface 2210 is restored.

In addition, in the foregoing embodiment, only the portrait mode is described. A page turning method in the landscape mode may be the same as the page turning method in the portrait mode. For details, refer to the page turning process in the portrait mode. Details are not described herein again.

This application further provides an electronic device, including:
a memory, configured to store instructions executed by one or more processors of the electronic device, and
the processor, where when the processor executes the instructions in the memory, the electronic device is caused to perform the page turning method shown in FIG. 4 to FIG. 22 in the foregoing embodiments.

This application further provides a computer-readable storage medium. The computer-readable storage medium stores instructions. When the instructions are run by a processor, the processor is caused to perform the page turning methods shown in FIG. 4 to FIG. 22 in the foregoing embodiments.

This application further provides a computer program product including instructions. When the computer program product runs on an electronic device, the processor is caused to perform the page turning methods shown in FIG. 4 to FIG. 22 in the foregoing embodiments.

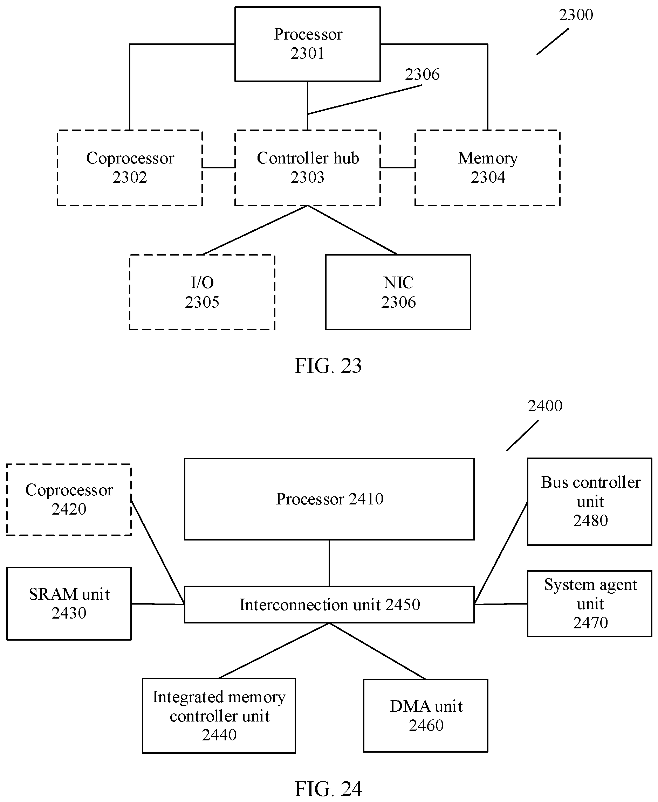

FIG. 23 is a block diagram of an electronic device 2300 according to an embodiment of this application. The electronic device 2300 may include one or more processors 2301 coupled to a controller hub 2303. For at least one embodiment, the controller hub 2303 communicates with the processor 2301 via a multi-branch bus such as a front side bus (front side Bus, FSB), a point-to-point interface such as a quick path interconnect (quick path interconnect, QPI), or a similar connection 2306. The processor 2301 executes instructions for controlling a data processing operation of a general type. In an embodiment, the controller hub 2303 includes but is not limited to a graphics memory controller hub (graphics memory controller hub, GMCH) (not shown) and an input/output hub (input output hub, IOH) (the input/output hub may be on separate chips) (not shown). The GMCH includes a memory and a graphics controller, and is coupled to the IOH.

The electronic device 2300 may further include a coprocessor 2302 and a memory 2304 coupled to the controller hub 2303. Alternatively, one or both of the memory and the GMCH may be integrated into the processor (as described in this application). The memory 2304 and the coprocessor 2302 are directly coupled to the processor 2301 and the controller hub 2303. The controller hub 2303 and the IOH are located in a single chip.

The memory 2304 may be, for example, a dynamic random access memory (dynamic random access memory, DRAM), a phase change memory (phase change memory, PCM), or a combination thereof. As a computer-readable storage medium, the memory 2304 may include one or more tangible and non-transitory computer-readable media configured to store data and/or instructions. For example, the memory 2304 may include any proper nonvolatile memory such as a flash memory and/or any proper nonvolatile storage device such as one or more hard disk drives (hard-disk drive, HDD(s)), one or more compact disc (compact disc, CD) drives, and/or one or more digital versatile disc (digital versatile Disc, DVD) drives.

According to some embodiments of this application, the memory 2304 that is used as a computer-readable storage medium stores instructions. When the instructions are executed on a computer, the system 2300 is caused to perform the floating ball control display method in the foregoing embodiments. For details, refer to the page turning methods shown in FIG. 4 to FIG. 22 in the foregoing embodiments. Details are not described herein again.

In an embodiment, the coprocessor 2302 is a dedicated processor, for example, a high-throughput many integrated core (many integrated core, MIC) processor, a network or communication processor, a compression engine, a graphics processor, a general purpose graphics processing unit (general purpose computing on GPU, GPGPU), or an embedded processor. Optional properties of the coprocessor 2302 are represented by dashed lines in FIG. 23.

In an embodiment, the electronic device 2300 may further include a network interface (network interface controller, NIC) 2306. The network interface 2306 may include a transceiver, configured to provide a radio interface for the electronic device 2300, to communicate with any another suitable device (such as a front-end module or an antenna). In various embodiments, the network interface 2306 may be integrated with another component of the electronic device 2300. The network interface 2306 may implement a function of a communication unit in the foregoing embodiments.

The electronic device 2300 may further include an input/output (input/output, I/O) device 2305. The I/O device 2305 may include: a user interface, where this design enables a user to interact with the electronic device 2300; a peripheral component interface, where this design enables the peripheral component to interact with the electronic device 2300; and/or a sensor, where this sensor is configured to determine an environmental condition and/or position information related to the electronic device 2300.

It should be noted that FIG. 23 is merely an example. To be specific, although FIG. 23 shows that the electronic device 2300 includes a plurality of components such as the processor 2301, the controller hub 2303, and the memory 2304, in actual application, a device using the methods in this application may include only some of the components of the electronic device 2300, for example, may only include the processor 2301 and the network interface 2306. A property of an optional component is shown by dashed lines in FIG. 23.

FIG. 24 is a block diagram of an SoC (System on Chip, system on chip) 2400 according to an embodiment of this application. In FIG. 24, similar components have same reference numerals. In addition, a dashed box is an optional feature of a more advanced SoC. In FIG. 24, the SoC 2400 includes: an interconnection unit 2450, coupled to a processor 2410; a system agent unit 2470; a bus controller unit 2480; an integrated memory controller unit 2440; a group or one or more coprocessors 2420 that may include integrated graphics logic, an image processor, an audio processor, and a video processor; a static random access memory (Static Random Access Memory, SRAM) unit 2430; and a direct memory access (Direct Memory Access, DMA) unit 2460. In an embodiment, the coprocessor 2420 includes a dedicated processor, for example, a network or communication processor, a compression engine, a GPGPU, a high throughput MIC processor, or an embedded processor.

The static random access memory (SRAM) unit 2430 may include one or more tangible and non-transitory computer-readable storage media that are configured to store data and/or instructions. The computer-readable storage medium may store instructions. Specifically, temporary and permanent copies of these instructions are stored. The instructions may include: When the instructions are executed by at least one unit in the processor, the SoC 2400 is enabled to perform a floating ball control display method in the foregoing embodiments. For details, refer to the page turning methods shown in FIG. 4 to FIG. 22 in the foregoing embodiments. Details are not described herein again.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code can be applied to input instructions to perform the functions described in this application and generate output information. The output information can be applied to one or more output devices in a known manner. For a purpose of this application, a processing system includes any system that has a processor such as a digital signal processor (Digital Signal Processor, DSP), a microcontroller, an application-specific integrated circuit (Application Specific Integrated Circuit, ASIC), or a microprocessor.

The program code may be implemented in a high-level programming language or an object-oriented programming language to communicate with the processing system. The program code can also be implemented in an assembly language or a machine language when needed. Actually, the mechanisms described in this application are not limited to a scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism of storing or transmitting information in a machine (namely, computer)-readable form, including but not limited to a floppy disk, a compact disc, an optical disc, a compact disc read-only memory (Compact Disc Read Only Memory, CD-ROMs), a magneto-optical disk, a read-only memory (Read Only Memory, ROM), a random access memory (RAM), an erasable programmable read only memory (Erasable Programmable Read Only Memory, EPROM), an electrically erasable programmable read-only memory (Electrically Erasable Programmable Read Only Memory, EEPROM), a magnetic card or an optical card, a flash memory, or a tangible machine-readable memory that transmits information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (namely, computer)-readable form.

In the accompanying drawings, some structural or method features may be shown in a particular arrangement and/or order. However, it should be understood that such a particular arrangement and/or order may not be needed. Instead, in some embodiments, the features may be arranged in a manner and/or sequence different from that shown in the accompanying drawings in the specification. In addition, inclusion of the structural or method features in a particular figure does not imply that such features are required in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that: In the examples and specification of this application, relational terms such as first and second are merely used to distinguish one entity or operation from another, and do not necessarily require or imply any such actual relationship or order between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application is illustrated and described with reference to some preferred embodiments of the present invention, a person of ordinary skill in the art should understand that various changes may be made to the form and details in this application without departing from the spirit and scope of this application.

## Claims

1. A page turning method, applied to an electronic device, wherein the method comprises:
displaying an application interface of a first application, wherein the application interface comprises a first display area and a second display area, and the first display area and the second display area partially overlap or do not overlap;
in response to determining that a gaze point of a user relative to the application interface moves from the first display area to the second display area, determining page turning waiting time of the application interface of the first application; and
in response to determining that the gaze point of the user moves from the first display area to the second display area, after the page turning waiting time has elapsed, and in response to determining that the gaze point of the user moves from the second display area to the first display area, performing a page turning operation on the application interface of the first application.

2. The method according to claim 1, wherein the method further comprises:
in response to determining that the gaze point of the user moves from the first display area to the second display area, displaying page turning prompt information in the application interface of the first application after the page turning waiting time has elapsed, wherein
the page turning prompt information prompts the user to move the gaze point from the second display area to the first display area, to turn a page.

3. The method according to claim 1, wherein the determining that the gaze point of the user relative to the application interface moves from the first display area to the second display area comprises:
determining that a display area in which the gaze point of the user is currently located is the second display area, and determining that a display area in which the gaze point of the user is previously located is the first display area; and
the determining that the gaze point of the user moves from the second display area to the first display area comprises:
determining that the display area in which the gaze point of the user is currently located is the first display area, and determining that the display area in which the gaze point of the user is previously located is the second display area, wherein
the display area in which the gaze point of the user is currently located and the display area in which the gaze point of the user is previously located are determined based on at least one frame of facial image of the user.

4. The method according to claim 1, wherein the determining the page turning waiting time of the application interface of the first application comprises:
determining a page reading speed of the user in the first display area;
estimating, based on the page reading speed, remaining reading time of the user in the second display area; and
determining the page turning waiting time based on the remaining reading time.

5. The method according to claim 4, wherein the determining the page reading speed of the user in the first display area comprises:
obtaining first accumulated time in which the gaze point of the user stays in the first display area; and
determining the page reading speed based on the first accumulated time and a page information amount in the first display area.

6. The method according to claim 4, wherein the estimating, based on the page reading speed, the remaining reading time of the user in the second display area comprises:
when the page reading speed is within a preset speed range, determining estimated reading time of the user in the second display area based on a page information amount in the second display area and the page reading speed; or
when the page reading speed is beyond the preset speed range, determining the estimated reading time of the user in the second display area based on the page information amount in the second display area and a preset reading speed or a historical reading speed of the user; and
determining the remaining reading time based on the estimated reading time and second accumulated time in which the gaze point of the user stays in the second display area.

7. The method according to claim 4, wherein the determining the page turning waiting time based on the remaining reading time comprises:
when the remaining reading time is within a preset time range, determining the page turning waiting time as the remaining reading time;
when the remaining reading time is less than a minimum value of the preset time range, determining that the page turning waiting time is first preset time; and
when the remaining reading time is greater than a maximum value of the preset time range, determining that the page turning waiting time is second preset time.

8. The method according to claim 1, wherein the performing the page turning operation on the application interface of the first application comprises:
in response to determining that the gaze point of the user moves from the second display area to the first display area, performing, after third preset time has elapsed, the page turning operation on the application interface of the first application.

9. The method according to claim 8, wherein the method further comprises:
within the third preset time, in response to determining that the gaze point of the user moves from the first display area to the second display area, skipping performing the page turning operation on the application interface of the first application.

10. A page turning method, applied to an electronic device, wherein the method comprises:
displaying an application interface of a second application, wherein the application interface comprises a first display area and a second display area, and the first display area and the second display area partially overlap or do not overlap;
in response to determining that a gaze point of a user relative to the application interface moves from the first display area to the second display area, and after fourth preset time has elapsed, adjusting a page scrolling speed of the application interface of the second application from a first scrolling speed to a second scrolling speed.

11. The method according to claim 10, wherein the method further comprises:
determining an adjustment coefficient corresponding to the user; and
determining the second scrolling speed based on the adjustment coefficient.

12. The method according to claim 10, wherein the method further comprises:
in response to determining that the gaze point of the user moves from the second display area to the first display area, and after fifth preset time has elapsed, adjusting the page scrolling speed of the application interface of the second application from the second scrolling speed to the first scrolling speed.

13. An electronic device, comprising:
a memory, configured to store instructions executed by one or more processors of the electronic device; and
the processor, wherein when the processor executes the instructions in the memory, the electronic device is caused to perform the page turning method according to any one of claims 1 to 12.

14. A computer-readable storage medium, wherein the computer-readable storage medium stores instructions, and when the instructions are executed on a computer, the computer is caused to perform the page turning method according to any one of claims 1 to 12.
